# FASCICULE DE BREVET EUROPEEN

(11) **EP 2 963 518 B1**
(45) Date de publication et mention de la délivrance du brevet: **15.03.2017**
(21) Numéro de dépôt: 15172660.1
(22) Date de dépôt: 18.06.2015
(51) Int. Cl.: G05D 1/08, G05D 1/10, B64C 13/18, B64C 27/02

(54) **PROCÉDÉ ET SYSTÈME DE MISE EN VOL STATIONNAIRE D'UN AÉRONEF À VOILURE TOURNANTE EN TENUE DE TRAJECTOIRE OU TENUE DE CAP SELON SA VITESSE D' AVANCEMENT**
VERFAHREN UND SYSTEM ZUM ERREICHEN EINER STATIONÄREN FLUGSITUATION EINES DREHFLÜGELFLUGZEUGS MIT BEIBEHALTUNG DER FLUGBAHN ODER DES KURSES JE NACH VORSCHUBGESCHWINDIGKEIT
A METHOD AND SYSTEM FOR ENGAGING HOVERING FLIGHT FOR A ROTARY WING AIRCRAFT, ENABLING IT TO MAINTAIN EITHER TRACK OR HEADING DEPENDING ON ITS FORWARD SPEED

(30) Priorité: 30.06.2014 FR 1401479
(43) Date de publication de la demande: 06.01.2016
(73) Titulaire: Airbus Helicopters, 13725 Marignane Cedex (FR)
(72) Inventeur: SALESSE-LAVERGNE, Marc, 13190 Allauch (FR)
(74) Mandataire: Pouillot, Laurent Pierre Paul

(56) Documents cités:
- EP-A1- 1 607 327
- EP-A1- 2 574 546
- EP-A2- 0 455 580
- WO-A1-93/05461
- WO-A1-2012/096668
- WO-A2-99/55582
- US-A- 5 001 646

## Description

La présente invention est du domaine des systèmes de commande de vol des aéronefs à voilures tournantes et plus particulièrement des assistances à l'utilisation de ces commandes de vol telles qu'un pilote automatique.

La présente invention concerne un procédé de mise en vol stationnaire d'un aéronef à voilure tournante en tenue de trajectoire ou tenue de cap selon sa vitesse d'avancement longitudinale formant ainsi un procédé de commande de vol « full envelope », c'est-à-dire couvrant aussi bien les phases de vol près du sol à basse vitesse qu'à hautes altitudes et à grande vitesse. La présente invention concerne également un système de mise en vol stationnaire d'un aéronef à voilure tournante en tenue de trajectoire ou tenue de cap selon sa vitesse d'avancement longitudinale.

Les aéronefs à voilures tournantes sont des appareils volants qui se distinguent principalement des autres aéronefs motorisés par leur capacité à évoluer aussi bien en vol de croisière à vitesses élevées qu'en vol à basses vitesses ou en vol stationnaire. Une telle capacité est procurée par l'exploitation d'au moins un rotor principal à axe de rotation sensiblement vertical équipant l'aéronef.

Ce rotor principal constitue une voilure tournante procurant la sustentation, voire aussi la propulsion de l'aéronef. Le comportement de l'aéronef à voilure tournante en vol peut être modifié à partir d'une variation du pas cyclique et/ou du pas collectif des pales de la voilure tournante. Une variation du pas cyclique des pales induit une modification du comportement de l'aéronef en assiette, et plus particulièrement en tangage et/ou en roulis. Une variation du pas collectif des pales induit une modification du comportement de l'aéronef en sustentation, pouvant générer des déplacements particulièrement suivant un axe sensiblement vertical, mais également suivant ses axes de tangage et de roulis selon l'assiette de l'aéronef.

L'aéronef à voilure tournante est aussi manoeuvrable en lacet sur lui-même, à partir de l'exploitation d'un dispositif anticouple en lacet. Par exemple, un tel dispositif anticouple est formé d'un rotor de queue à axe de rotation sensiblement horizontal situé à l'arrière de l'aéronef. Un tel rotor arrière comporte plusieurs pales dont généralement uniquement le pas collectif est variable bien que le pas cyclique puisse également être variable.

Un aéronef à voilure tournante comporte généralement un seul rotor principal et un rotor arrière anticouple. Cependant, un aéronef à voilure tournante peut également comporter deux rotors principaux contrarotatifs, par exemple en tandem ou bien coaxiaux, aucun dispositif anticouple n'étant alors nécessaire.

De plus, un hélicoptère hybride est un aéronef à voilure tournante comportant au moins un rotor principal, procurant principalement sa sustentation et à moindres mesures sa propulsion, et au moins un moyen de propulsion spécifique tel qu'une hélice propulsive. Un tel hélicoptère hybride permet de couvrir de grandes distances et d'évoluer avec une vitesse d'avancement élevée. Le dispositif anticouple de cet hélicoptère hybride peut être formé par l'une au moins des hélices propulsives. Une telle hélice propulsive comporte plusieurs pales dont généralement uniquement le pas collectif est variable.

En outre, un aéronef à voilure tournante peut comporter des éléments aérodynamiques tels que des empennages, voire des ailes dans le cas des hélicoptères hybrides notamment. Ces éléments aérodynamiques peuvent comporter des parties mobiles et participent à la manoeuvrabilité de l'aéronef et notamment lors de vol de croisière à des vitesses d'avancement élevées.

Une variation du comportement en vol de l'aéronef à voilure tournante peut alors être réalisée à partir d'une modification de différents paramètres de vol de l'aéronef. Ces différents paramètres de vol concernent notamment les valeurs de pas cyclique et/ou collectif des rotors principaux ainsi que la valeur de pas collectif du rotor anticouple et/ou des moyens de propulsion et les éventuels éléments aérodynamiques. Une telle modification de ces paramètres de vol est susceptible d'être réalisée selon divers modes de commande.

Selon un mode manuel de commande, le pilote de l'aéronef à voilure tournante dispose de leviers de commande entraînés manuellement par ce pilote de l'aéronef pour opérer une variation de ces paramètres de vol et notamment des pas cyclique et/ou collectif des pales des différents rotors par l'intermédiaire de chaînes cinématiques de commande manuelle. La notion de manuelle est à considérer en opposition à la notion d'automatique, sans préjuger du moyen utilisé par l'homme pour manoeuvrer l'aéronef, palonnier, manette ou manche notamment.

Suivant une forme de réalisation d'un mode manuel de commande, les leviers de commande sont en prise sur des chaînes respectives à transmission mécanique distante d'efforts, permettant au pilote de l'aéronef à voilure tournante de manoeuvrer mécaniquement les pales à partir des leviers de commande, soit directement, soit par l'intermédiaire de servocommandes.

Suivant une autre forme de réalisation d'un mode manuel de commande, un entraînement d'un levier de commande par le pilote est générateur de signaux électriques d'activation d'au moins une servocommande de manoeuvre des pales.

Selon un mode automatisé de commande, un pilote automatique est générateur d'ordres de commande de ces paramètres de vol et notamment d'une variation du pas des pales des différents rotors par l'intermédiaire de chaînes cinématiques de commande automatisée. Lorsque le pilote automatique est activé, les ordres de commande se substituent aux ordres de commande générés par le pilote directement à partir des leviers de commande pour activer les servocommandes.

Le pilote automatique permet de maintenir une progression stable de l'aéronef à voilure tournante selon des consignes de vol préalablement mémorisées. Un état effectif de progression de l'aéronef est évalué par le pilote automatique à un instant donné au regard de diverses informations fournies par l'instrumentation de bord de l'aéronef. A partir d'une différence détectée par le pilote automatique entre les consignes de vol et l'état effectif de progression de l'aéronef, le pilote automatique intervient sur le comportement en vol de l'aéronef à voilure tournante par l'intermédiaire d'un ou plusieurs paramètres de vol pour rétablir son état effectif de progression conformément aux consignes de vol.

L'activation du pilote automatique est commandée par le pilote de l'aéronef à voilure tournante à partir d'un ou de plusieurs boutons de commande spécifiques.

Selon un mode de stabilisation mis en oeuvre par le pilote automatique, une consigne initiale de tenue d'assiette de l'aéronef à voilure tournante est par exemple définie au regard de l'état de progression de l'aéronef évalué à partir de l'activation du pilote automatique. Le mode de stabilisation procure une stabilisation de l'aéronef par correction d'assiette de l'aéronef au moyen du pilote automatique par rapport à la consigne initiale.

Selon un mode particulier de pilotage par transparence, le pilote peut éventuellement intervenir temporairement sur le comportement de l'aéronef par l'intermédiaire des leviers de commande, en surpassant les ordres de commande générés par le pilote automatique. Les consignes initiales de vol sont figées, une éventuelle intervention temporaire du pilote sur le comportement de l'aéronef n'induisant pas de modification des consignes initiales de vol.

Il est par ailleurs connu de corriger une consigne de vol telle une consigne de tenue d'assiette en fonction de l'état de progression effective de l'aéronef à voilure tournante à l'issue d'une action du pilote sur les leviers de commande. Il est encore connu de permettre au pilote de l'aéronef de corriger une consigne de tenue d'assiette en faisant varier la valeur de cette consigne par incrémentation, par l'intermédiaire d'un ou plusieurs organes de commande dédiés. Par exemple, deux organes de commande désignés généralement par le terme anglais « beep » sont utilisés. Par exemple, de tels organes de commande peuvent être positionnés respectivement sur un levier de commande de pas collectif généralement appelé « manche » et un levier de commande de pas cyclique.

Le document FR1347243 décrit un dispositif de pilotage par transparence permettant une action du pilote avec soit un retour aux consignes initiales de vol après arrêt de l'action du pilote et soit un enregistrement de nouvelles consignes de vol prenant en compte cette action du pilote.

On connait également le document FR2991664 qui décrit un système automatisé d'assistance au pilotage permettant de tenir un paramètre de vol sur un axe de progression de l'aéronef tout en prenant en compte l'action du pilote de l'aéronef sur au moins un autre axe par l'intermédiaire de leviers de commande de vol lors du fonctionnement du pilote automatique de l'aéronef. Différents modes de guidage sont susceptibles d'être sélectionnés par le pilote privilégiant par exemple une tenue en vitesse verticale ou d'avancement ou bien une tenue de cap, d'incidence ou de pente.

De plus, le document US5001646 décrit un système de commande automatisé permettant au pilote d'agir sur la progression de l'aéronef par l'intermédiaire d'un organe de commande muni de quatre axes. Le pilote peut alors commander les accélérations longitudinale, latérale et verticale de l'aéronef ainsi que sa vitesse angulaire en lacet tout en conservant d'une part, à basse vitesse d'avancement, une vitesse par rapport au sol indépendamment du cap suivi et d'autre part, à grande vitesse d'avancement, un virage coordonné et une pente.

La stabilisation de l'aéronef à voilure tournante est procurée à partir de modes de base, selon lesquels le pilote automatique est par exemple générateur d'une augmentation de stabilité par amortissement des mouvements angulaires de l'aéronef, ou encore de tenue d'assiettes ou de cap. Les modes de base procurent un confort de pilotage pour le pilote de l'aéronef à voilure tournante, mais ne corrigent pas d'éventuels écarts par rapport à la vitesse ou la position de l'aéronef désirées par le pilote. Il a donc été proposé d'associer aux modes de base des modes supérieurs de fonctionnement pour annuler d'éventuels écarts de position, de vitesse et/ou d'accélération de l'aéronef par rapport aux valeurs désirées par le pilote. Ces valeurs désirées sont entrées sous forme de consignes de vol que les modes supérieurs du pilote automatique utilisent pour amener et maintenir l'aéronef sur la position, la vitesse et/ou l'accélération désirées. L'opération de stabilisation de l'aéronef procurée par les modes de base est effectuée rapidement par le pilote automatique, tandis que l'opération de rétablissement de la position, de la vitesse et/ou de l'accélération de l'aéronef à voilure tournante est ensuite effectuée plus lentement par les modes supérieurs.

On connait par exemple le document WO95/34029 qui décrit un système de commande de vol d'un aéronef permettant de stabiliser les vitesses de l'aéronef en contrôlant les commandes selon les axes de lacet, roulis et tangage ainsi que la portance tout en conservant un cap constant.

Le pilote automatique est encore susceptible de procurer des fonctions avancées d'assistance au guidage de l'aéronef à voilure tournante. Les potentialités offertes par les modes supérieurs sont accessoirement exploitées pour procurer une telle assistance. Les modalités d'exécution des fonctions avancées relèvent de fonctionnalités prédéfinies du pilote automatique, au regard d'une trajectoire de consigne que doit suivre l'aéronef.

De fait, le fonctionnement de tels modes supérieurs de pilotage automatique est conçu pour des opérations IFR désignant en langue anglaise « Instruments Flight Rules », c'est-à-dire pour un pilotage pouvant être effectué uniquement à l'aide des instruments de vol et pouvant alors être réalisé avec une vision extérieure de l'aéronef dégradée, voire aucune vision extérieure.

Par opposition, un pilotage à vue est réalisé selon des opérations VFR désignant en langue anglaise « Visual Flight Rules ». L'expression en langue anglaise « pilotage eyes-out » est également utilisée et signifie que le pilote effectue un pilotage de l'aéronef en regardant à l'extérieur de l'aéronef et non uniquement à l'aide des instruments et assistance de vol.

La trajectoire de consigne est par exemple exploitée au regard d'une mission de vol préalablement déterminée par le pilote de l'aéronef à voilure tournante ou bien en phase d'approche d'un site connu et repéré. Un tel site est notamment équipé de moyens procurant une interactivité entre le site et le pilote automatique, tels que des balises de radionavigation. En l'absence de tels équipements interactifs, le repérage du site est effectué par le pilote de l'aéronef en mode manuel, puis, le pilote de l'aéronef active la fonction avancée souhaitée.

Les modalités de fonctionnement du pilote automatique permettent une assistance automatisée du pilotage en correction d'assiette de l'aéronef à voilure tournante en phase de vol de croisière, à vitesses d'avancement élevées et à une position de l'aéronef éloignée du sol. En phase de vol de croisière, l'environnement de l'aéronef est normalement dégagé et le pilote de l'aéronef est dispensé d'une intervention soutenue sur la manoeuvre de l'aéronef. Une telle dispense d'intervention soutenue est aussi susceptible d'être procurée à proximité du sol en environnement connu par la mise en oeuvre d'une fonction avancée du pilote automatique, tel que pour une phase d'approche d'une piste d'atterrissage connue et/ou équipée de moyens de repérage de son environnement.

De même, lors d'une phase d'approche d'un site d'intervention, y compris à basses vitesses, parfaitement connu, identifié et repéré par le pilote automatique, l'activation d'une fonction avancée est rendue possible pour guider l'aéronef à voilure tournante suivant la trajectoire de consigne correspondante.

En outre, le pilote automatique commande, comme un homme pilotant l'aéronef, traditionnellement les vitesses longitudinale, latérale et verticale de l'aéronef respectivement par le pas cyclique longitudinal, le pas cyclique latéral et le pas collectif du rotor principal, le pas collectif d'un rotor anticouple pilotant l'orientation de l'aéronef autour de son axe de lacet. Ces vitesses longitudinale, latérale et verticale sont définies dans un repère lié à l'aéronef dont les axes sont formés par les directions longitudinale, latérale et verticale de l'aéronef.

Par ailleurs, un pilote automatique peut également permettre à l'aéronef de réaliser des virages coordonnés. Un virage coordonné est un virage réalisé sans dérive de l'aéronef vis-à-vis de la trajectoire du virage par rapport au sol, il s'agit alors d'une coordination sol, ou bien sans facteur de charge latéral, il s'agit alors d'une coordination air.

Dans le cas d'une coordination sol, un virage est coordonné par rapport au sol. L'aéronef n'a pas de dérive vis-à-vis du sol, permet ainsi de suivre avec précision une trajectoire au sol. Un tel virage coordonné par rapport au sol est utilisé de préférence à faible vitesse et basse altitude afin de se déplacer en sécurité à proximité du relief ou de bâtiments, le nez de l'aéronef restant généralement aligné sur la trajectoire au sol.

Dans le cas d'une coordination air, un virage est coordonné par rapport à l'air. L'aéronef n'a pas de dérive vis-à-vis de l'air et privilégiant ainsi le confort des occupants et minimisant le dérapage de l'aéronef. Un tel virage coordonné par rapport à l'air est utilisé de préférence en vol de croisière, c'est-à-dire à haute vitesse et haute altitude et loin de tout obstacle.

On connait le document US5213283 qui décrit un système de commande permettant de réaliser un virage coordonné. Ce système de commande fournit automatiquement une commande de pilotage en lacet en réponse à une commande de pilotage en roulis du pilote de l'aéronef lors de la réalisation d'un tel virage coordonné, la charge du pilote étant ainsi réduite.

En outre, le document WO2012/134447 décrit un système de commande de vol d'un aéronef permettant de réaliser un virage coordonné dans l'ensemble du domaine de vol, en minimisant la charge de travail du pilote. Ce système de commande utilise à haute vitesse d'une part des changements d'inclinaison de l'aéronef pour piloter le cap ainsi qu'une accélération latérale et d'autre part la vitesse par rapport à l'air de l'aéronef pour piloter le cap, réalisant un virage coordonné par rapport à l'air. A basse vitesse, le système de commande utilise l'angle de dérapage de l'aéronef pour maintenir le cap aligné sur la trajectoire de l'aéronef, réalisant ainsi un virage coordonné par rapport au sol. Dans une zone de transition entre ces deux domaines de vol, l'angle de dérapage de l'aéronef et son accélération latérale sont utilisés pour maintenir l'aéronef en virage coordonné.

Par ailleurs, les aéronefs à voilures tournantes sont des aéronefs motorisés prévus pour pouvoir évoluer dans des conditions variées et parfois difficiles, tant au niveau des conditions atmosphériques, telles que la présence d'un vent violent et de conditions de visibilité variables, qu'au niveau des conditions de vol, telles qu'à basses vitesses ou en vol stationnaire, ou encore de l'environnement, tel que proches d'un quelconque sol inconnu ou mal connu.

Dans des conditions de vol difficiles, des facteurs inattendus sont susceptibles de devoir être pris en compte par le pilote de l'aéronef à voilure tournante. L'exploitation par le pilote de l'aéronef d'une assistance automatisée à la manoeuvre de l'aéronef dans de telles conditions de vol difficiles est donc délicate, voire impossible. Par exemple lorsque l'aéronef est proche du sol, une éventuelle modification de son comportement doit être rapidement opérée. Les modalités de fonctionnement du pilote automatique ne permettent que difficilement une modification rapide d'une trajectoire à suivre par l'aéronef au moyen de l'exploitation d'une fonction avancée mettant en oeuvre les modes supérieurs de fonctionnement du pilote automatique.

De fait, lors de telles conditions de vol difficiles, l'utilisation d'un pilotage IFR peut être dangereuse et un pilotage à vue est à privilégier, le pilote pouvant cependant utiliser certains instruments et/ou assistance de l'aéronef. On parle notamment de conditions de vol à vue en conditions VMC correspondant à l'acronyme désignant en langue anglaise « Visual Meteorological Conditions » ou en conditions de visibilité dégradée DVE correspondant à l'acronyme désignant en langue anglaise « Degraded Visual Environment ». Le pilote peut alors avoir besoin d'ajuster fréquemment la vitesse et/ou la trajectoire de l'aéronef afin d'éviter d'éventuels obstacles et de se rapprocher de ses objectifs, par exemple en cas de fort vent latéral.

Le document FR2777535 décrit un système de commande de vol d'un aéronef permettant notamment de contrôler la vitesse latérale par rapport au sol en gardant un cap constant afin de compenser par exemple un fort vent latéral. Ce système de commande permet également de maintenir la direction de la vitesse de l'aéronef, et donc sa trajectoire, constante lors d'une modification de son cap et/ou de sa vitesse longitudinale.

Par ailleurs, on connait le document WO2012/134460 qui décrit un système de commande de vol d'un aéronef permettant de conserver une trajectoire constante par rapport au sol lors d'une rotation de cap à basse vitesse. Le système de commande agit sur les commandes en tangage et roulis afin de maintenir cette trajectoire, le pilote pouvant engager une rotation de l'aéronef à tout moment par l'intermédiaire de ces commandes.

De même, le document WO2012/096668 décrit un système de commande de vol d'un aéronef permettant de contrôler la vitesse verticale de l'aéronef, sa pente par rapport au sol et/ou une hauteur par rapport au sol selon sa vitesse d'avancement. En-dessous d'un seuil de vitesse d'avancement prédéterminé, correspondant à une situation de vol proche d'un vol stationnaire, le système de commande de vol permet de tenir une hauteur par rapport au sol. Au-dessus de ce seuil de vitesse d'avancement prédéterminé, le système de commande de vol permet alors de tenir une vitesse verticale de l'aéronef ou bien une pente par rapport au sol.

De plus, le document FR2814433 décrit un dispositif de commande de vol d'un aéronef dont une action sur un organe de commande peut avoir différents effets suivant la vitesse de translation de l'aéronef. Ainsi, si cette vitesse de translation de l'aéronef est inférieure ou égale à un seuil prédéterminé, une action sur cet organe de commande agit directement sur cette vitesse de translation. Par contre, si cette vitesse de translation de l'aéronef est supérieure à ce seuil prédéterminé, une action sur cet organe de commande agit par exemple, sur l'accélération en translation de l'aéronef ou bien sur sa vitesse angulaire.

En outre, le document WO2013/012408 décrit un système de commande de vol d'un aéronef permettant de réaliser de façon automatique des mises en vol stationnaire de l'aéronef à partir d'un vol d'avancement ainsi qu'une tenue en position en vol stationnaire.

Enfin, l'arrière plan technologique du domaine de l'invention comporte les documents WO99/55582, EP1607327, WO93/05461, EP2574546 et EP0455580.

La présente invention a alors pour objet un procédé de mise en vol stationnaire ainsi qu'un système de mise en vol stationnaire permettant de réaliser une tenue de trajectoire ou bien une tenue de cap d'un aéronef à voilure tournante selon sa vitesse longitudinale U_{X} tout en s'affranchissant des limitations mentionnées ci-dessus.

Selon l'invention, un procédé de mise en vol stationnaire en tenue de trajectoire ou bien en tenue de cap d'un aéronef à voilure tournante est destiné à un aéronef à voilure tournante comportant au moins un organe de commande, muni conjointement de plusieurs axes de mobilité A,B,C,D, et un pilote automatique générateur d'ordres de commande selon des modes prédéfinis de fonctionnement et selon des consignes de vol.

L'aéronef est caractérisé par trois directions privilégiées, une direction longitudinale X s'étendant de l'arrière de l'aéronef vers l'avant de l'aéronef, une direction d'élévation Z s'étendant de bas en haut perpendiculairement à la direction longitudinale X et une direction transversale Y s'étendant de gauche à droite perpendiculairement aux directions longitudinale X et d'élévation Z. La direction longitudinale X est l'axe de roulis de l'aéronef, la direction transversale Y est son axe de tangage et la direction d'élévation Z est son axe de lacet.

L'aéronef comporte au moins une voilure tournante, munie de plusieurs pales principales dont le pas collectif et le pas cyclique sont variables autour d'un axe de pas, permettant à l'aéronef d'effectuer des mouvements de rotation autour de ces directions X,Y,Z et de translation selon les directions X,Y,Z. Les ordres de commande du pilote automatique peuvent provoquer ces mouvements de l'aéronef en rotation et/ou en translation par rapport aux directions X,Y,Z.

Le procédé de mise en vol stationnaire est remarquable en ce que l'on applique d'une part un premier mode de fonctionnement des organes de commande et du pilote automatique lorsque la vitesse longitudinale U_{X} de l'aéronef est supérieure à une première vitesse seuil Vₛₑᵤᵢₗ₁, le pilote automatique permettant alors à l'aéronef de s'approcher d'une position d'arrêt S déterminée lors de l'engagement du procédé avec une tenue de trajectoire par rapport au sol, les consignes de vol du pilote automatique étant un angle de route sol TKₛₒₗ, un taux de décélération Ga de la vitesse d'avancement Va, une pente P, et un cap ψ, et d'autre part un second mode de fonctionnement des organes de commande et du pilote automatique lorsque la vitesse longitudinale U_{X} est inférieure à une seconde vitesse seuil Vₛₑᵤᵢₗ₂, le pilote automatique permettant alors à l'aéronef de réaliser une mise en vol stationnaire avec une tenue de cap vers cette position d'arrêt S, les consignes de vol du pilote automatique étant la vitesse longitudinale U_{X}, une vitesse latérale V_{Y}, une vitesse verticale W_{Z} et un cap ψ. Par ailleurs, la première vitesse seuil Vₛₑᵤᵢₗ₁ est supérieure à la seconde vitesse seuil Vₛₑᵤᵢₗ₂.

La vitesse longitudinale U_{X} de l'aéronef est une projection de la vitesse d'avancement Va de l'aéronef sur la direction longitudinale X.

L'aéronef à voilure tournante comportant au moins une voilure tournante à axe de rotation sensiblement vertical, c'est-à-dire parallèle à la direction d'élévation Z, peut être construit selon plusieurs architectures. L'aéronef comporte par exemple une seule voilure tournante formée par un rotor principal assurant la sustentation et la propulsion de l'aéronef ainsi qu'un rotor arrière anticouple à axe de rotation sensiblement horizontal, c'est-à-dire parallèle à la direction transversale Y. Ce rotor arrière anticouple permet également des manoeuvres autour de l'axe de lacet.

Selon un autre exemple, l'aéronef comporte deux voilures tournantes formées par deux rotors principaux contrarotatifs qui sont en tandem ou bien coaxiaux. L'aéronef peut également comporter au moins une voilure tournante, tel un rotor principal, assurant principalement la sustentation de l'aéronef et une ou plusieurs hélices propulsives à axes de rotation sensiblement horizontaux, c'est-à-dire parallèles à la direction longitudinale X, assurant sa propulsion. Un tel aéronef constitue alors un hélicoptère hybride.

En outre, un aéronef à voilure tournante peut comporter des éléments aérodynamiques tels que des empennages ou bien des ailes dans le cas des hélicoptères hybrides notamment. Ces éléments aérodynamiques peuvent comporter des parties mobiles afin de faciliter la manoeuvrabilité de l'aéronef en particulier lors d'un vol de croisière.

Quelle que soit l'architecture de l'aéronef, le pilote de l'aéronef peut modifier le comportement en vol de l'aéronef en agissant sur un ou plusieurs leviers de commande provoquant une variation du pas cyclique et/ou du pas collectif des pales principales de chaque voilure tournante ainsi qu'un moyen de commande tel un palonnier provoquant une variation du pas collectif des pales secondaires d'un rotor arrière ou bien telle une manette provoquant une variation du pas collectif des pales secondaires d'au moins une hélice propulsive. De même, le pilote de l'aéronef peut également provoquer un déplacement des parties mobiles des éléments aérodynamiques éventuellement présents sur l'aéronef afin de modifier le comportement en vol de l'aéronef.

De plus, le pilote automatique peut également modifier le comportement en vol de l'aéronef par l'intermédiaire des ordres de commandes qu'il fournit et selon les consignes de vol, en provoquant une variation du pas cyclique et/ou du pas collectif des pales principales de chaque voilure tournante, une variation du pas collectif des pales secondaires d'un rotor arrière ou bien d'au moins une hélice propulsive ainsi qu'un déplacement des parties mobiles des éléments aérodynamiques éventuellement présents.

Ces variations de pas et ces déplacements de parties mobiles permettent de générer des rotations et/ou des translations de l'aéronef par rapport à ces directions X,Y,Z ou bien des variations de ses vitesses angulaires et/ou linéaires par rapport à ces mêmes directions X,Y,Z. Ces rotations et ces translations de l'aéronef se produisent selon un repère lié à l'aéronef et formé par les directions X,Y,Z.

L'aéronef évolue généralement selon une trajectoire Tₛₒₗ déterminée par rapport au sol dans le but d'atteindre un objectif au sol tel qu'un terrain d'atterrissage ou bien une position objectif de vol stationnaire. On considère que l'aéronef évolue selon une trajectoire Tₛₒₗ lorsque son centre de gravité suit cette trajectoire Tₛₒₗ. De fait, cette trajectoire Tₛₒₗ est définie dans un repère géographique terrestre, c'est-à-dire fixe par rapport au globe terrestre, dans lequel l'aéronef est mobile. Ce repère géographique terrestre est par exemple formé à partir des points cardinaux, par exemple par les directions du nord et de l'est ainsi que par une direction verticale telle que celle de la gravité terrestre.

Le vol d'un aéronef selon cette trajectoire Tₛₒₗ peut être caractérisé, selon un premier type de caractérisation, par un angle de route sol TKₛₒₗ pris par rapport à la direction du nord magnétique ou bien du nord géographique, dans un plan horizontal de ce repère géographique terrestre, une vitesse d'avancement Va, une pente P et un cap ψ. La vitesse d'avancement Va de l'aéronef est sa vitesse selon la direction de cette trajectoire Tₛₒₗ. La vitesse d'avancement Va peut être la vitesse d'avancement de l'aéronef par rapport au sol ou bien la vitesse d'avancement de l'aéronef par rapport à l'air.

La vitesse d'avancement de l'aéronef par rapport au sol est utilisée généralement comme vitesse d'avancement Va lors des vols à basses altitudes, c'est-à-dire l'aéronef étant proche d'obstacles tels que le relief et les bâtiments. La vitesse d'avancement de l'aéronef par rapport à l'air est quant à elle utilisée comme vitesse d'avancement Va essentiellement lors des vols de croisière à hautes altitudes, c'est-à-dire l'aéronef étant éloigné de tout obstacle.

En outre, cette, vitesse d'avancement Va peut varier suivant un taux d'accélération ou de décélération Ga qui peut permettre de caractériser également cette trajectoire Tₛₒₗ en lieu et place de cette vitesse d'avancement Va selon ce premier type de caractérisation.

La pente P de l'aéronef est l'angle formé par la direction de la trajectoire Tₛₒₗ par rapport à une orientation horizontale du repère terrestre dans lequel est définie la trajectoire Tₛₒₗ, c'est-à-dire par rapport à un plan perpendiculaire à la direction verticale formée par la direction de la gravité terrestre.

Le cap ψ de l'aéronef est l'angle formé par la projection dans le plan horizontal du repère terrestre de la direction longitudinale X de l'aéronef et la direction du nord. Ainsi, lorsque le cap ψ et l'angle de route sol TKₛₒₗ sont égaux, le nez de l'aéronef pointe sur la trajectoire Tₛₒₗ. De la sorte, la direction longitudinale X est alors alignée sur cette trajectoire Tₛₒₗ. Dans le cas contraire, le nez de l'aéronef ne se trouve pas sur cette trajectoire Tₛₒₗ et cette trajectoire Tₛₒₗ ne se trouve alors pas alignée sur la direction longitudinale X, un aéronef à voilure tournante ayant la particularité de pouvoir avancer dans toutes les directions indépendamment de sa direction longitudinale X.

Le vol d'un aéronef selon cette trajectoire Tₛₒₗ peut également être caractérisé, selon un second type de caractérisation, par une vitesse selon les trois directions privilégiées X,Y,Z de l'aéronef, c'est-à-dire une vitesse longitudinale U_{X} selon la direction longitudinale X, une vitesse latérale V_{Y} selon la direction transversale Y et une vitesse verticale W_{Z} selon la direction d'élévation Z ainsi que par le cap ψ. Ces vitesses longitudinale U_{X}, latérale V_{Y} et verticale W_{Z} sont les composantes selon ces trois directions privilégiées X,Y,Z de l'aéronef de la vitesse d'avancement de l'aéronef et de préférence de la vitesse d'avancement de l'aéronef par rapport au sol.

Ce second type de caractérisation de la trajectoire Tₛₒₗ est en lien direct avec les capacités de déplacement d'un aéronef en rotation autour des directions X,Y,Z et en translation selon les directions X,Y,Z. En effet, un aéronef à voilure tournante comporte généralement au moins un premier levier de commande, appelé également manche, permettant de modifier le pas cyclique d'un rotor principal et un second levier de commande permettant de modifier le pas collectif de ce rotor principal. Ce premier levier de commande comporte deux axes de mobilité et permet ainsi de commander simultanément des mouvements de rotation de l'aéronef autour des directions longitudinale X et transversale Y et, par suite, d'agir sur les vitesses longitudinale U_{X} et latérale V_{Y} de l'aéronef. Le second levier de commande comporte un seul axe de mobilité et permet de commander des mouvements de translation de l'aéronef selon la direction d'élévation Z et, par suite, d'agir sur la vitesse verticale W_{Z} de l'aéronef.

De plus, un tel aéronef à voilure tournante comporte généralement un palonnier permettant de piloter un dispositif anticouple, par exemple en modifiant le pas collectif d'un rotor arrière anticouple, et de piloter ainsi l'angle de lacet de l'aéronef et, par suite, son cap ψ.

Un tel aéronef peut également disposer, lorsqu'il comporte des éléments aérodynamiques munis de parties mobiles, de moyens de commande permettant de piloter le déplacement de ces parties mobiles et par suite, de modifier les assiettes de l'aéronef afin d'agir sur les vitesses longitudinale U_{X}, latérale V_{Y} et verticale W_{Z} de l'aéronef. Le déplacement de ces parties mobiles peut également être couplé aux premier et second leviers.

Ce second type de caractérisation de la trajectoire Tₛₒₗ est particulièrement adapté au vol de l'aéronef à très basse vitesse d'avancement en garantissant une tenue du cap ψ de l'aéronef afin d'évoluer avec une exposition au vent constante et de minimiser la modification des références visuelles du pilote de l'aéronef. Ce second type de caractérisation de la trajectoire Tₛₒₗ peut notamment être utilisé dans des cas particuliers tels que le maintien d'une position de vol stationnaire ou le déplacement autour d'une position de vol stationnaire ou bien un treuillage à partir d'un bateau qui avance. En effet, le pilotage direct des vitesses longitudinale U_{X}, latérale V_{Y} et verticale W_{Z} de l'aéronef sans changer le cap ψ de l'aéronef permet de voler à proximité d'un objectif de treuillage ou de posé et d'ajuster facilement la position de l'appareil par rapport à un tel objectif, par exemple par un déplacement latéral ou vertical. La modification indépendante du cap ψ permet quant à elle de choisir un cap donnant une exposition désirée de l'aéronef au vent ou bien la visibilité désirée de l'objectif et de conserver ensuite ce cap ψ lors des ajustements de vitesses ultérieurs.

Le premier type de caractérisation de la trajectoire Tₛₒₗ est quant à lui plus adapté au vol de croisière à haute altitude en garantissant une tenue de la trajectoire Tₛₒₗ afin de modifier directement l'angle de route TKₛₒₗ indépendamment de la vitesse d'avancement Va et la pente P, ou bien uniquement cette vitesse d'avancement Va ou encore la pente P. En effet, dans ce cas, en réponse à une action autour de l'axe roulis commandé par le pilote de l'aéronef, le nez de l'aéronef tourne afin de rester aligné sur la trajectoire Tₛₒₗ que suit l'aéronef facilitant ainsi le suivi de cette trajectoire Tₛₒₗ et limitant voire annulant l'inconfort créé par l'inclinaison en roulis de l'aéronef. Cependant, ce premier type de caractérisation de la trajectoire Tₛₒₗ peut également être utilisé lors d'un vol à basse altitude afin de se rapprocher d'un objectif tel qu'un terrain d'atterrissage selon cette trajectoire Tₛₒₗ.

Par contre, le premier type de caractérisation de la trajectoire Tₛₒₗ n'est pas lié directement et simplement aux capacités de déplacement de l'aéronef. En effet, lorsque le pilote veut modifier un ou plusieurs paramètres de ce premier type de caractérisation de la trajectoire Tₛₒₗ, il ne peut pas agir directement sur l'angle de route sol TKₛₒₗ, la vitesse d'avancement Va, la pente P et le cap ψ. Le pilote doit en fait généralement agir simultanément sur plusieurs paramètres de vol parmi les pas collectif et cyclique des pales principales d'au moins un rotor principal et éventuellement le pas collectif d'un rotor arrière ou d'au moins une hélice propulsive ou encore le déplacement d'au moins une partie mobile d'éléments aérodynamiques. En outre, il est quasiment impossible au pilote, en agissant manuellement sur les paramètres de vol, de modifier un seul de ces paramètres de la trajectoire Tₛₒₗ sans qu'au moins un autre paramètre de la trajectoire Tₛₒₗ soit modifié. De plus, suivant l'architecture de l'aéronef à voilure tournante, il est possible de modifier au moins un de ces paramètres de la trajectoire Tₛₒₗ en agissant indifféremment sur plusieurs paramètres de vol de l'aéronef.

Par exemple, on peut modifier la vitesse d'avancement Va d'un hélicoptère hybride ou bien le taux d'accélération ou de décélération Ga de cette vitesse d'avancement Va en agissant soit sur les hélices propulsives, soit sur le rotor principal. Par contre, si le cap ψ de cet aéronef est différent de son angle de route sol TKₛₒₗ, l'action unique sur les hélices propulsives ou le rotor principal modifieront la vitesse d'avancement Va, mais également l'angle de route sol TKₛₒₗ.

Ainsi, le vol d'un aéronef selon une trajectoire Tₛₒₗ peut être caractérisée par ces deux types de caractérisation, soit par un angle de route sol TKₛₒₗ, une vitesse d'avancement Va ou bien le taux d'accélération ou de décélération Ga de cette vitesse d'avancement Va, une pente P et un cap ψ, soit par une vitesse longitudinale U_{X}, une vitesse latérale V_{Y}, une vitesse verticale W_{Z} et un cap ψ.

Le procédé de mise en vol stationnaire selon l'invention permet de basculer entre le premier mode de fonctionnement des organes de commande et du pilote automatique selon le premier type de caractérisation de la trajectoire Tₛₒₗ et le second mode de fonctionnement des organes de commande et du pilote automatique selon le second type de caractérisation de la trajectoire Tₛₒₗ en fonction de la vitesse longitudinale U_{X} de l'aéronef. Ce second mode de fonctionnement des organes de commande et du pilote automatique est ainsi utilisé pour de faibles vitesses d'avancement Va, le premier mode de fonctionnement étant utilisé à des vitesses d'avancement Va supérieures.

Ainsi, lorsque la vitesse longitudinale U_{X} est supérieure à la première vitesse seuil Vₛₑᵤᵢₗ₁, le pilote automatique permet à l'aéronef de s'approcher d'une position d'arrêt S déterminée lors de l'engagement du procédé avec une tenue de trajectoire par rapport au sol, les consignes de vol du pilote automatique étant l'angle de route sol TKₛₒₗ, la vitesse d'avancement Va ou bien le taux de décélération Ga de cette vitesse d'avancement Va, la pente P et le cap ψ. Par contre, lorsque cette vitesse longitudinale U_{X} est inférieure à la seconde vitesse seuil Vₛₑᵤᵢₗ₂, le pilote automatique permet alors à l'aéronef de réaliser une mise en vol stationnaire avec une tenue de cap vers cette position d'arrêt S, les consignes de vol du pilote automatique étant la vitesse longitudinale U_{X}, la vitesse latérale V_{Y}, la vitesse verticale W_{Z} et le cap ψ.

Cependant, l'évolution de l'aéronef selon une pente P n'a de sens qu'à partir d'une certaine vitesse d'avancement de l'ordre de 20 noeuds (20 kt). De fait, lorsque la vitesse d'avancement Va de l'aéronef est inférieure à une troisième vitesse seuil Vₛₑᵤᵢₗ₃ typiquement égale à 20kt, mais dans le domaine de vitesse d'une tenue de trajectoire, le pilotage de l'aéronef peut être réalisé en remplaçant la consigne de vol correspondant à la pente P par une consigne de vol correspondant à la vitesse verticale W_{Z}.

La position d'arrêt S est déterminée en fonction de la trajectoire Tₛₒₗ suivie par l'aéronef et les paramètres de cette trajectoire Tₛₒₗ. Cette position d'arrêt S est donc alignée sur cette trajectoire Tₛₒₗ et déterminée en fonction de la vitesse d'avancement Va et de la pente P de l'aéronef ainsi que d'un taux de décélération prédéterminé de la vitesse d'avancement Va.

En effet, la vitesse d'avancement Va doit être réduite jusqu'à être nulle pour arriver à un vol stationnaire. De fait, cette vitesse d'avancement Va est réduite selon un taux de décélération Ga permettant d'avoir un compromis entre efficacité et confort et, selon les capacités de l'aéronef. La vitesse d'avancement Va est donc variable et décroissante selon ce taux de décélération Ga dans le cas d'une approche vers cette position d'arrêt S avec une tenue de trajectoire. De fait, le taux de décélération Ga de cette vitesse d'avancement Va est utilisé de préférence comme une des consignes de vol du pilote automatique de l'aéronef en lieu et place de cette vitesse d'avancement Va.

Les consignes de vol correspondant aux vitesses longitudinale U_{X}, latérale V_{Y} et verticale W_{Z} sont également variables et décroissantes selon un taux de décélération dans le cas d'une mise en vol stationnaire avec une tenue de cap vers cette position d'arrêt S.

Le taux de décélération Ga de la vitesse d'avancement Va peut être compris dans un intervalle prédéfini. Par exemple, ce taux de décélération Ga est compris entre 0.25 et 1.15 m/s², avec une valeur nominale de 0.7 m/s².

La position d'arrêt S est déterminée lors de l'engagement par le pilote du procédé de mise en vol stationnaire selon l'invention, cet engagement du procédé de mise en vol stationnaire étant obtenu par action du pilote sur un moyen d'activation, par exemple par un simple appui ou bien un double appui sur un bouton dédié.

En outre, cette position d'arrêt S peut être représentée sur un moyen d'affichage de l'aéronef, tel qu'un écran disposé sur le tableau de bord ou bien un moyen de visualisation tête haute. Ainsi, le pilote peut visualiser la position d'arrêt S vis-à-vis de l'environnement et éventuellement par rapport à la position objectif de cette mise en vol stationnaire. Cette position d'arrêt S peut être affichée sur ce moyen d'affichage de l'aéronef avant engagement du procédé de mise en vol stationnaire afin d'indiquer au pilote de l'aéronef vers quelle position l'aéronef s'arrêtera.

Cependant, lorsque l'aéronef est proche de cette position d'arrêt S, par exemple lors de l'entrée en phase de vol selon une tenue de cap, il peut être préférable de ne pas afficher la position d'arrêt S. En effet, cette position d'arrêt S peut être superposé avec d'autres symboles sur le moyen d'affichage de l'aéronef et susceptible de générer une confusion pour le pilote de l'aéronef. Cette phase de vol selon une tenue de cap intervient par exemple à 20 mètres (20m) de la position d'arrêt S.

En outre, le basculement entre le premier et le second mode de fonctionnement des organes de commande et du pilote automatique se fait par rapport à un seuil à hystérésis selon les vitesses seuil Vₛₑᵤᵢₗ₁ et Vₛₑᵤᵢₗ₂, la première vitesse seuil Vₛₑᵤᵢₗ₁ étant supérieure à la seconde vitesse seuil Vₛₑᵤᵢₗ₂.

On entend par seuil à hystérésis un ensemble de seuils dont la consigne d'activation d'un système est différente de sa consigne d'arrêt. Un tel seuil à hystérésis se compose d'un seuil haut et d'un seuil bas différents. La présence de ces deux seuils permet essentiellement d'éviter de trop nombreuses activations ou de trop nombreux arrêts consécutifs. Dans le cas du procédé selon l'invention, le seuil haut est la première vitesse seuil Vₛₑᵤᵢₗ₁ et le seuil bas est la seconde vitesse seuil Vₛₑᵤᵢₗ₂.

Ainsi, le premier mode de fonctionnement des organes de commande et du pilote automatique est engagé dès que la vitesse longitudinale U_{X} dépasse la première vitesse seuil Vₛₑᵤᵢₗ₁ et reste engagé tant que la vitesse longitudinale U_{X} est supérieure ou égale à la seconde vitesse seuil Vₛₑᵤᵢₗ₂. De même, le second mode de fonctionnement des organes de commande et du pilote automatique est engagé dès que la vitesse longitudinale U_{X} devient inférieure à la seconde vitesse seuil Vₛₑᵤᵢₗ₂ et reste engagé tant que la vitesse longitudinale U_{X} est inférieure ou égale à la première vitesse seuil Vₛₑᵤᵢₗ₁.

En outre, les vitesses seuil Vₛₑᵤᵢₗ₁ et Vₛₑᵤᵢₗ₂ peuvent être fonction des conditions de vol de l'aéronef, essentiellement de la vitesse longitudinale du vent subi par l'aéronef ainsi que la vitesse latérale V_{Y} de l'aéronef.

En effet, selon la vitesse et la direction du vent relatif subi par l'aéronef, le nez de l'aéronef peut être aligné avec la trajectoire Tₛₒₗ de l'aéronef ou bien se rapprocher de la direction du vent. Par exemple, à basse vitesse longitudinale U_{X}, un pilote conservera de préférence l'alignement du nez de l'aéronef sur la direction du vent en cas de fort vent plutôt que de passer en vent de travers afin de limiter la puissance consommée par le rotor arrière de l'aéronef et/ou une prise d'assiette en roulis de l'aéronef qui peut être très inconfortable pour les occupants de l'aéronef. A contrario, pour une même vitesse longitudinale U_{X} faible, ce pilote alignera le nez de l'aéronef dans la trajectoire Tₛₒₗ de l'aéronef lorsque le vent est faible et maintiendra le nez dans la direction du vent par vent fort. Rendre ces seuils dépendant de la projection du vent sur l'axe longitudinal de l'appareil permet donc de se rapprocher de ce qu'un pilote fait naturellement.

Avantageusement, pour éviter que l'aéronef évolue avec un vent latéral important, le procédé selon l'invention permet, par l'utilisation des première et seconde vitesses seuil Vₛₑᵤᵢₗ₁ et Vₛₑᵤᵢₗ₂ variables selon la vitesse longitudinale du vent subi par l'aéronef, de basculer sur un pilotage tenue de cap plus tôt, c'est-à-dire alors que la vitesse longitudinale U_{X} de l'aéronef est élevée.

On entend par vitesse longitudinale du vent relatif subi par l'aéronef une projection sur la direction longitudinale X de la vitesse de ce vent relatif subi par l'aéronef. Par convention, on considère qu'une vitesse longitudinale du vent relatif subi par l'aéronef est positive lorsque l'aéronef subit du vent de face et qu'une telle vitesse longitudinale du vent est négative lorsque l'aéronef subit du vent arrière.

Par exemple, avec un vent de face d'une vitesse inférieure à 20 noeuds (20 kt), la première vitesse seuil Vₛₑᵤᵢₗ₁ est égale à 5 kt et la seconde vitesse seuil Vₛₑᵤᵢₗ₂ est égale à 7 kt. Pour un vent de face d'une vitesse comprise entre 20 kt et 40 kt, la première vitesse seuil Vₛₑᵤᵢₗ₁ est égale à 8 kt et la seconde vitesse seuil Vₛₑᵤᵢₗ₂ est égale à 10 kt.

De plus, si la vitesse latérale V_{Y} de l'aéronef est inférieure ou égale à 20 kt, aucun coefficient multiplicateur n'est appliqué aux vitesses seuils Vₛₑᵤᵢₗ₁ et Vₛₑᵤᵢₗ₂. Par contre, si cette vitesse latérale V_{Y} de l'aéronef est supérieure à 20 kt, un coefficient multiplicateur peut être appliqué aux vitesses seuils Vₛₑᵤᵢₗ₁ et Vₛₑᵤᵢₗ₂. Ce coefficient multiplicateur peut par exemple être égal à 1,5 lorsque la vitesse latérale V_{Y} atteint 40 kt.

Par ailleurs, un pilote peut avoir besoin de modifier la position d'arrêt S manuellement ou bien d'ajuster cette trajectoire Tₛₒₗ aussi bien lors d'un vol de croisière que d'un vol à basse altitude. Notamment, le pilote peut modifier cette position d'arrêt S déterminée lors de l'engagement du procédé de mise en vol stationnaire afin d'ajuster cette position d'arrêt S et de la faire coïncider avec la position objectif de mise en vol stationnaire. Cet ajustement de cette position d'arrêt S peut être réalisé grâce au moyen de visualisation et de la représentation de la position d'arrêt S notamment quand l'aéronef est éloigné de cette position d'arrêt S. Ensuite, l'ajustement de cette position d'arrêt S est au final généralement réalisé à vue par le pilote. De plus, lors d'un vol à vue et à basse altitude, le pilote peut ajuster cette trajectoire Tₛₒₗ, en fonction de l'environnement et/ou des conditions climatiques, afin de voler à proximité de bâtiments ou bien de reliefs, voire d'éviter un bâtiment ou bien le relief, en étant par exemple soumis à un vent fort, tel qu'un vent latéral, pouvant influer sur les manoeuvres de l'aéronef.

Avantageusement, le procédé de mise en vol stationnaire selon l'invention permet au pilote de modifier la position d'arrêt S et d'agir directement sur les paramètres caractérisant la trajectoire Tₛₒₗ par transparence par l'intermédiaire d'organes de commande afin de modifier ces paramètres caractérisant la trajectoire Tₛₒₗ.

De la sorte, au cours de ce premier mode de fonctionnement des organes de commande et du pilote automatique, on peut commander par transparence les paramètres de la trajectoire Tₛₒₗ selon le premier type de caractérisation de cette trajectoire Tₛₒₗ afin que ledit aéronef suive une nouvelle trajectoire Tₛₒₗₙ.

Suite à chaque action du pilote sur au moins un organe de commande par rapport aux axes de mobilité A,B,C,D, l'aéronef évolue selon une nouvelle trajectoire Tₛₒₗₙ, caractérisée, selon le premier type de caractérisation, par un nouvel angle de route sol TKₛₒₗₙ, un nouveau taux de décélération Gaₙ de la vitesse d'avancement Va_{,} une nouvelle pente Pₙ et/ou un nouveau cap ψₙ afin de s'approcher d'une nouvelle position d'arrêt Sₙ déterminée à partir de la position d'arrêt S et des actions du pilote.

On peut ainsi commander par transparence une variation du taux de décélération Ga de la vitesse d'avancement Va générant une modification de cette vitesse d'avancement Va, indépendamment de l'angle de route sol TKₛₒₗ et de la pente P, par une première action par rapport à un premier axe A de mobilité d'un organe de commande et par l'intermédiaire du pilote automatique. La position d'arrêt S est alors déplacée sur la trajectoire Tₛₒₗ, la distance entre l'aéronef et cette position d'arrêt S étant modifiée. Une augmentation du taux de décélération Ga réduit ainsi cette distance entre l'aéronef et la position d'arrêt S alors qu'une réduction de ce taux de décélération Ga augmente cette distance.

De même, on peut commander par transparence une modification de la position d'arrêt S par l'intermédiaire d'une modification de l'angle de route sol TKₛₒₗ, indépendamment de la vitesse d'avancement Va et de la pente P, par une seconde action par rapport à un second axe B de mobilité d'un organe de commande et par l'intermédiaire dudit pilote automatique. La position d'arrêt S est alors déplacée dans un plan horizontal, la trajectoire Tₛₒₗ étant modifiée. La position d'arrêt S se déplace alors sensiblement sur un arc de cercle dont le centre est la position courante de l'aéronef.

Par exemple, à partir d'une phase de vol stabilisé au cours de laquelle l'aéronef vole suivant une trajectoire Tₛₒₗ sur laquelle se trouve la position d'arrêt S, une action latérale du pilote sur un organe de commande, correspondant à cette seconde action modifie la consigne de l'angle de route sol TKₛₒₗ et, par suite, entraine une modification de la trajectoire Tₛₒₗ du vol. Tant que le pilote maintient cette action latérale, la nouvelle position d'arrêt Sₙ est modifiée et sa position défile sur le moyen d'affichage de l'aéronef. Puis lorsque le pilote interrompt cette action latérale, l'aéronef est remis sensiblement à plat, le taux d'évolution de la consigne de l'angle de route sol TKₛₒₗ est annulée et un nouvel angle de route sol TKₛₒₗₙ constitue une consigne de vol. La nouvelle position d'arrêt Sₙ cesse donc de défiler et se stabilise alors dans le prolongement de la nouvelle trajectoire Tₛₒₗₙ correspondant à cette nouvelle consigne de l'angle de route sol TKₛₒₗₙ.

Enfin, on peut commander par transparence une modification de l'altitude de la position d'arrêt S par l'intermédiaire d'une modification de la pente P ou bien de la vitesse verticale W_{Z} le cas échéant, indépendamment de la vitesse d'avancement Va et de l'angle de route sol TKₛₒₗ, par une troisième action par rapport à un troisième axe C de mobilité d'un organe de commande et par l'intermédiaire dudit pilote automatique. La position d'arrêt S est alors déplacée verticalement, uniquement son altitude étant modifiée, cette position d'arrêt S se trouvant toujours sur la trajectoire Tₛₒₗ.

Par exemple, la nouvelle position d'arrêt Sₙ est déterminée par le prolongement de la nouvelle pente Pₙ en prenant en compte d'une part une légère anticipation pour tenir compte de l'arrêt de la variation de la pente P après arrêt de la troisième action du pilote et d'autre part un court arrondi pour la mise en palier de l'aéronef à l'arrivée à la nouvelle position d'arrêt Sₙ et la mise en vol stationnaire à cette nouvelle position d'arrêt Sₙ.

De plus, une action du pilote par rapport à un quatrième axe de mobilité D d'un organe de commande permet également de modifier un paramètre de la trajectoire Tₛₒₗ de l'aéronef. Par exemple, le cap ψ peut être modifié par une action par rapport à ce quatrième axe de mobilité D.

Par ailleurs, ce cap ψ peut être modifié directement par le pilote de l'aéronef par une action sur les palonniers présents traditionnellement sur un aéronef. De plus, ce cap ψ n'a pas d'effet sur la trajectoire Tₛₒₗ suivie par l'aéronef et, par suite, sur la position d'arrêt S dans le cadre d'un vol de l'aéronef en tenue de trajectoire, la direction de la trajectoire Tₛₒₗ étant définie par l'angle de route sol TKₛₒₗ.

Par suite, une action du pilote par rapport à un quatrième axe de mobilité D d'un organe de commande peut permettre de modifier un autre paramètre de cette trajectoire Tₛₒₗ de l'aéronef. De préférence, une action du pilote par rapport à ce quatrième axe de mobilité D permet de modifier l'angle de route sol TKₛₒₗ et, par suite, la position d'arrêt S, le pilote ayant ainsi deux possibilités pour modifier cet angle de route sol TKₛₒₗ par l'intermédiaire de deux axes de mobilité B,D.

Avantageusement, l'utilisation de ces deux axes de mobilité B,D pour agir sur le seul angle de route sol TKₛₒₗ permet au pilote de lui donner plus de souplesse pour modifier la position d'arrêt S et cet angle de route sol TKₛₒₗ par exemple par l'une ou l'autre de ces mains et de faciliter ainsi l'enchaînement de manoeuvres et/ou des modifications de ces paramètres de la trajectoire Tₛₒₗ de l'aéronef.

Ainsi, une action sur un organe de commande par rapport à au moins un des axes de mobilité A,B,C,D permet, par l'intermédiaire du pilote automatique qui agit sur les différents paramètres de vol, de modifier respectivement le taux de décélération Ga de la vitesse d'avancement Va, l'angle de route sol TKₛₒₗ et la pente P ou bien la vitesse verticale W_{Z} le cas échéant et, par suite, la position d'arrêt S. Une telle action par rapport à un de ces axes de mobilité A,B,C modifie alors les consignes de vol fournies au pilote automatique qui génère des ordres de commande afin de réaliser la demande du pilote. Dans ce but, le pilote automatique peut agir sur un ou plusieurs paramètres de vol de l'aéronef, tels que les pas collectif et cyclique des pales principales d'un rotor principal, le pas collectif des pales secondaires d'un rotor arrière ou bien d'au moins une hélice propulsive ou encore les déplacements des parties mobiles des éléments aérodynamiques éventuellement présents sur l'aéronef, afin d'obtenir cette modification d'un seul paramètre de la trajectoire Tₛₒₗ selon le premier type de caractérisation.

De fait, les consignes de vol du pilote automatique sont synchronisées, au cours de ce premier mode de fonctionnement des organes de commande et du pilote automatique et lors de chaque action du pilote sur un organe de commande, sur les paramètres de la nouvelle trajectoire Tₛₒₗₙ et sur la nouvelle position d'arrêt Sₙ, ces consignes de vol étant le nouvel angle de route sol TKₛₒₗₙ, le nouveau taux de décélération Gaₙ de la vitesse d'avancement Va_{,} la nouvelle pente Pₙ, ou bien la nouvelle vitesse verticale W_{Zn} le cas échéant, et/ou le nouveau cap ψₙ.

De plus, la consigne de vol correspondant à la pente P ou bien la vitesse verticale W_{Z} le cas échéant peut également être variable afin que l'aéronef s'approche de cette nouvelle position d'arrêt Sₙ par l'intermédiaire du pilote automatique.

Ainsi, le procédé de commande de mise en vol stationnaire selon l'invention permet au pilote de modifier la trajectoire Tₛₒₗ suivie par l'aéronef et la position d'arrêt S en agissant directement sur les paramètres de la trajectoire Tₛₒₗ en tenue de trajectoire selon le premier type de caractérisation et de permettre au pilote automatique de suivre automatiquement la nouvelle trajectoire Tₛₒₗₙ choisie par le pilote afin de s'approcher de cette nouvelle position d'arrêt Sₙ.

Cependant, le cap ψ peut être modifié sans action directe du pilote sur ce cap ψ lorsque le pilote agit sur un organe de commande lors d'un vol de croisière afin de modifier l'angle de route sol TKₛₒₗ ou bien la vitesse d'avancement Va.

Par exemple, lors de conditions de vol particulières, essentiellement en cas de fort vent, certains angles limites entre la direction longitudinale X et la trajectoire Tₛₒₗ peuvent conduire à un vol inconfortable pour les occupants voire dangereux. Notamment un alignement de la direction longitudinale X de l'aéronef et sa trajectoire Tₛₒₗ en cas de fort vent latéral peut conduire à un tel vol.

De fait, dans ces conditions de vol particulières, le cap ψ peut être modifié par le pilote automatique lors de variations de l'angle de route sol TKₛₒₗ ou bien de la vitesse d'avancement Va afin d'éviter d'atteindre de tels angles limites.

Par suite, les consignes de vol du pilote automatique sont synchronisées sur le paramètre de la trajectoire Tₛₒₗ qui a été modifié par cette action du pilote, c'est-à-dire le nouvel angle de route sol TKₛₒₗₙ ou bien le nouveau taux de décélération Gaₙ de_{,} la vitesse d'avancement Va et le nouveau cap ψₙ afin que l'aéronef suive par l'intermédiaire du pilote automatique la nouvelle trajectoire Tₛₒₗₙ obtenue.

De même, une modification du cap ψ commandée par le pilote, par exemple par transparence par action sur le palonnier de l'aéronef, d'une amplitude telle qu'elle soit susceptible de conduire à ces angles limites pour tenter de maintenir l'appareil sur la trajectoire initiale, peut conduire à une correction de l'angle de route sol TKₛₒₗ par le pilote automatique afin précisément d'éviter d'atteindre ces angles limites et entraînant, par suite, une modification de la position d'arrêt S.

Là encore, les consignes de vol du pilote automatique sont synchronisées sur le nouveau cap ψₙ et éventuellement le nouvel angle de route sol TKₛₒₗₙ de la nouvelle trajectoire Tₛₒₗₙ afin que l'aéronef suive par l'intermédiaire du pilote automatique la nouvelle trajectoire Tₛₒₗₙ obtenue et s'approche de cette nouvelle position d'arrêt Sₙ.

Bien entendu, le pilote peut également agir simultanément sur plusieurs axes de mobilité A,B,C,D, le pilote automatique générant des ordres de commande afin de modifier les paramètres de la trajectoire Tₛₒₗ et la position d'arrêt S tels que demandés par le pilote sans modification des autres paramètres de cette trajectoire Tₛₒₗ.

Par ailleurs, au cours du second mode de fonctionnement des organes de commande et du pilote automatique, on peut commander indépendamment et par transparence les paramètres de la trajectoire Tₛₒₗ selon le second type de caractérisation de cette trajectoire Tₛₒₗ afin que ledit aéronef suive une nouvelle trajectoire Tₛₒₗₙ et réalise une mise en vol stationnaire avec une tenue de cap vers une nouvelle position d'arrêt Sₙ.

On peut ainsi commander par transparence un déplacement longitudinal de la position d'arrêt S par une première action par rapport à un premier axe A de mobilité d'un organe de commande et par l'intermédiaire du pilote automatique. De même, on peut commander par transparence un déplacement latéral de la position d'arrêt S par une seconde action par rapport à un second axe B de mobilité d'un organe de commande et par l'intermédiaire dudit pilote automatique ainsi qu'un déplacement vertical de la position d'arrêt S par une troisième action par rapport à un troisième axe C de mobilité d'un organe de commande et par l'intermédiaire dudit pilote automatique.

De plus, une action du pilote par rapport à un quatrième axe de mobilité D d'un organe de commande permet de modifier le cap ψ de l'aéronef qui a un effet direct sur la direction d'avancement de l'aéronef dans le cas d'une tenue de cap, contrairement à la tenue de trajectoire. De fait, si l'aéronef a au moins une vitesse longitudinale U_{X}, latérale V_{Y} et verticale W_{Z} non nulle, chaque modification du cap ψ modifie les directions X,Y,Z vis-à-vis d'un repère terrestre et, par suite, les directions des vitesses longitudinale U_{X}, latérale V_{Y} et verticale W_{Z} changent également ainsi que la position d'arrêt S.

Par contre, on peut distinguer deux cas au cours du second mode de fonctionnement des organes de commande et du pilote automatique, selon que l'aéronef est déjà en vol stationnaire ou bien s'il est en approche de la position d'arrêt S.

En effet, lorsque l'aéronef est en vol stationnaire à la position d'arrêt S, les vitesses longitudinale U_{X}, latérale V_{Y} et verticale W_{Z} ainsi que les consignes de vol correspondantes sont nulles. Ainsi, une action sur un organe de commande par rapport aux axes de mobilité A,B,C,D permet, par l'intermédiaire du pilote automatique qui agit sur les différents paramètres de vol, de déplacer l'aéronef selon les demandes du pilote à la nouvelle position d'arrêt Sₙ. Une telle action par rapport à un de ces axes de mobilité A,B,C,D modifie temporairement les consignes de vol fournies au pilote automatique qui génère des ordres de commande afin de réaliser ce déplacement de l'aéronef vers la nouvelle position d'arrêt Sₙ. Ensuite, les consignes de vol correspondant aux vitesses longitudinale U_{X}, latérale V_{Y} et verticale W_{Z} sont de nouveau nulles. Par contre, le cap ψ peut être modifié sans effet sur la position d'arrêt S, l'aéronef ayant des vitesses U_{X},V_{Y},W_{Z} nulles, la consigne correspondant à ce cap ψ étant synchronisée sur un nouveau cap ψₙ.

Par contre, lorsque l'aéronef est en approche de la position d'arrêt S, au moins une des vitesses longitudinale U_{X}, latérale V_{Y} et/ou verticale W_{Z} ainsi qu'au moins une des consignes de vol correspondantes sont non nulles, mais décroissantes vers des valeurs nulles. De fait, une action sur un organe de commande par rapport à au moins un des axes de mobilité A,B,C,D permet par l'intermédiaire du pilote automatique de modifier respectivement et indépendamment les vitesses longitudinale U_{X}, latérale V_{Y} et verticale W_{Z} ainsi que le cap ψ et, par suite, une modification de la position d'arrêt S. Une telle action par rapport à un de ces axes de mobilité A,B,C,D modifie alors les consignes de vol fournies au pilote automatique afin de réaliser la demande du pilote, selon de nouvelles vitesses longitudinale U_{Xn}, latérale V_{Yn} et verticale W_{Zn} et/ou un nouveau cap ψₙ. Ces consignes de vol correspondantes sont également variables et décroissantes vers des valeurs nulles afin de réaliser une mise en vol stationnaire vers la nouvelle position d'arrêt Sₙ.

Par ailleurs, il est très difficile, voire impossible de maintenir manuellement un aéronef à une vitesse rigoureusement nulle qu'il s'agisse de la vitesse longitudinale U_{X}, la vitesse latérale V_{Y} ou bien la vitesse verticale W_{Z}. De fait, on peut considérer que, dès qu'une valeur absolue de la vitesse longitudinale U_{X}, de la vitesse latérale V_{Y} et/ou de la vitesse verticale W_{Z} est faible et inférieure à une quatrième vitesse seuil Vₛₑᵤᵢₗ₄, le pilote souhaite maintenir cette nouvelle vitesse nulle et la consigne de vol correspondante doit être nulle. Cette quatrième vitesse seuil Vₛₑᵤᵢₗ₄ est par exemple égale à 0.25 mètre par seconde (0.25m/s).

Il est également possible d'utiliser un seuil légèrement différent pour ces vitesses U_{X}, V_{Y} et W_{Z}, par exemple une quatrième vitesse horizontale seuil Vhₛₑᵤᵢₗ₄ pour la vitesse longitudinale U_{X} et la vitesse latérale V_{Y}, et une quatrième vitesse verticale seuil Vvₛₑᵤᵢₗ₄ pour la vitesse verticale W_{Z}.

Par exemple, lorsque les trois vitesses longitudinale U_{X}, latérale V_{Y} et verticale W_{Z} sont inférieures à cette quatrième vitesse seuil Vₛₑᵤᵢₗ₄, l'aéronef est dans une situation de vol proche d'un vol stationnaire, la méthode de mise en vol stationnaire permet alors de tenir une position d'arrêt S fixe par rapport au sol.

Ainsi, le procédé de commande de mise en vol stationnaire selon l'invention permet au pilote de modifier la position d'arrêt S de l'aéronef en agissant directement sur les paramètres de la trajectoire Tₛₒₗ en tenue de cap selon le second type de caractérisation et de permettre au pilote automatique de suivre automatiquement la nouvelle trajectoire Tₛₒₗₙ choisie par le pilote afin de s'approcher de cette nouvelle position d'arrêt Sₙ ou bien de déplacer l'aéronef qui est déjà en vol stationnaire.

Bien entendu, le pilote peut également, selon ce second mode de fonctionnement, agir simultanément sur plusieurs axes de mobilité A,B,C,D, le pilote automatique générant des ordres de commande afin de modifier la position d'arrêt S telle que demandée par le pilote sans modification des autres paramètres de cette trajectoire Tₛₒₗ.

Avantageusement, le procédé de mise en vol stationnaire selon l'invention permet ainsi d'assurer selon la vitesse longitudinale U_{X} de l'aéronef un vol automatique vers une position d'arrêt S autorisant un pilotage par transparence notamment afin de modifier cette position d'arrêt S selon une tenue de trajectoire ou bien de cap.

Quel que soit le mode de fonctionnement des organes de commande et du pilote automatique, les premier et second leviers de commande peuvent être utilisés comme étant respectivement les premier et second organes de commande, le premier organe de commande comportant alors le premier axe A de mobilité et le second axe B de mobilité, le second organe de commande comportant le troisième axe C de mobilité. Ces premier et second leviers permettent ainsi le pilotage de l'aéronef en tenue de trajectoire selon la trajectoire ou bien de cap selon le procédé selon l'invention et par l'intermédiaire du pilote automatique.

Cependant, une telle utilisation particulière des leviers de commande n'est pas adaptée pour une manoeuvre soudaine de l'aéronef afin par exemple d'éviter un obstacle se trouvant sur la trajectoire Tₛₒₗ de l'aéronef ou bien à proximité de celle-ci. En effet, les premier et second leviers de commande ne permettent pas dans cette utilisation particulière de réaliser rapidement un déplacement vertical ou latéral de l'aéronef.

Une manoeuvre soudaine d'évitement d'obstacle est généralement effectuée uniquement par une rotation autour de l'axe de tangage, c'est-à-dire par l'intermédiaire du premier levier de commande afin de réaliser un déplacement vertical. Mais cette manoeuvre autour de l'axe de tangage, obtenue par une variation du pas cyclique longitudinal, peut être accompagnée d'une action du pilote sur le second levier de commande entraînant alors également une variation du pas collectif.

De fait, une action brutale du pilote sur au moins un des premier et second leviers de commande, et de préférence uniquement le premier levier de commande, entraîne une désactivation de la tenue de la consigne de la pente P ou bien de la vitesse verticale W_{Z} le cas échéant par l'intermédiaire du pilote automatique. De la sorte, le pilote peut commander le pas cyclique longitudinal afin d'agir sur l'aéronef en rotation autour de l'axe de tangage et éventuellement le pas collectif afin d'agir sur l'aéronef en translation selon la direction d'élévation Z et ainsi réaliser la manoeuvre d'évitement nécessaire. Une telle manoeuvre d'évitement est principalement réalisée lors d'un vol d'avancement en tenue de trajectoire.

En effet, lors d'un vol en tenue de cap, notamment lors des phases de vol proche d'un vol stationnaire, il n'est pas nécessaire d'identifier une action brutale du pilote sur un des leviers de commande. L'assignation des actions aux premier et second leviers de commande est alors non ambiguë, une action longitudinale sur le premier levier de commande affectant essentiellement la vitesse longitudinale de l'aéronef et une action sur le second levier de commande affecte essentiellement sa vitesse verticale.

Par exemple, suite à la détection d'une telle action brutale du pilote, ce pilote peut commander par transparence le tangage de l'aéronef par l'intermédiaire du premier levier de commande afin de provoquer des mouvements de rotation de l'aéronef autour de la direction transversale Y. La pente P n'est alors plus considérée comme une consigne de vol en tenue de trajectoire et donc non pilotée par le pilote automatique afin de ne pas s'opposer à la manoeuvre d'évitement. De plus, le pas collectif reste constant sauf action par transparence du pilote sur le second levier de commande afin de provoquer des mouvements de translation de l'aéronef selon la direction d'élévation Z.

On entend par action brutale une action de grande amplitude du pilote de l'aéronef sur un des deux leviers de commande. En effet, une telle action de grande amplitude peut être considérée comme une demande d'évitement d'un obstacle de la part du pilote, le pilotage en tenue de trajectoire ou bien en tenue de cap étant réalisé par des mouvements de faible amplitude afin d'obtenir des modifications de la trajectoire Tₛₒₗ.

Par ailleurs, le système de mise en vol stationnaire selon l'invention peut comporter des organes de commande dédiés au pilotage par transparence de l'aéronef en tenue de trajectoire ou bien en tenue de cap selon la trajectoire Tₛₒₗ par l'intermédiaire du procédé selon l'invention et du pilote automatique.

Le système de mise en vol stationnaire selon l'invention peut par exemple comporter un premier organe de commande positionné sur le premier levier de commande et un second organe de commande positionné sur le second levier de commande. Le premier organe de commande comporte le premier axe A de mobilité et le second axe B de mobilité alors que le second organe de commande comporte le troisième axe C de mobilité et éventuellement le quatrième axe D de mobilité.

Le système de mise en vol stationnaire comporte ainsi deux organes de commande formant conjointement au moins trois axes de mobilité A,B,C, voire quatre axes de mobilité A,B,C,D. Un premier organe de commande est muni de deux axes de mobilité A,B et un second organe de commande est muni d'un ou deux axes de mobilité C,D.

De tels organes de commande sont généralement calibrés et commandent ainsi des mouvements de l'aéronef précis et prédéterminés. Ainsi, quel que soit le mode de fonctionnement des organes de commande et du pilote automatique, lorsque le pilote agit sur un des organes de commande en exerçant un appui continu par rapport à un axe de mobilité A,B,C,D, un déplacement de la position d'arrêt S et une variation d'un des paramètres de la trajectoire Tₛₒₗ d'une valeur prédéterminée est réalisée. De tels organes de commande sont souvent désignés par le terme en langue anglaise « beeps ».

Par exemple, lorsque l'aéronef évolue en tenue de trajectoire, lors d'un appui continu sur un organe de commande par rapport à l'axe de mobilité A, le taux de décélération Ga de la vitesse d'avancement Va de l'aéronef augmente ou diminue d'une valeur prédéterminée sur la trajectoire Tₛₒₗ tant que cet appui continu est maintenu, déplaçant ainsi la position d'arrêt S sur la trajectoire Tₛₒₗ. Puis, lorsque cet organe de commande est relâché par le pilote par rapport à l'axe de mobilité A, le pilote automatique synchronise ces consignes de vol sur le nouveau taux de décélération Gaₙ de la vitesse d'avancement Va maintenant une décroissance de la vitesse d'avancement Va de l'aéronef jusqu'à atteindre la nouvelle position d'arrêt Sₙ. Par exemple, la valeur prédéterminée de la variation de ce taux de décélération Ga de la vitesse d'avancement Va est de 0.14 m/s².

De même, lors d'un appui continu sur un organe de commande par rapport à l'axe de mobilité B ou bien D, l'angle de route sol TKₛₒₗ de l'aéronef varie au rythme de typiquement 3 degrés par seconde (3°/s) tant que cet appui continu est maintenu, déplaçant ainsi la position d'arrêt S dans un plan. Puis, lorsque cet organe de commande est relâché par le pilote par rapport à l'axe de mobilité B ou D, le pilote automatique synchronise ces consignes de vol sur le nouvel angle de route sol TKₛₒₗₙ de l'aéronef pour suivre une nouvelle trajectoire Tₛₒₗₙ afin d'atteindre la nouvelle position d'arrêt Sₙ.

Enfin, lors d'un appui continu sur un organe de commande par rapport à l'axe de mobilité C, la pente P de l'aéronef varie avec une vitesse de 0.3% de pente par seconde (0.3%/s) tant que cet appui continu est maintenu modifiant ainsi l'altitude de la position d'arrêt S. Puis, lorsque cet organe de commande est relâché par le pilote par rapport à l'axe de mobilité C, le pilote automatique synchronise ces consignes de vol sur la nouvelle pente Pₙ de l'aéronef pour suivre une nouvelle trajectoire Tₛₒₗₙ afin d'atteindre la nouvelle position d'arrêt Sₙ.

Par contre, lorsque l'aéronef évolue selon le second mode de fonctionnement des organes de commande et du pilote automatique du procédé selon l'invention, les effets de ces organes de commande peuvent être différents.

En effet, lorsque l'aéronef évolue en tenue de cap, lors d'un appui continu sur un organe de commande par rapport à l'axe de mobilité A, l'aéronef accélère ou décélère longitudinalement de 1.5 kt/s tant que cet appui continu est maintenu, déplaçant ainsi longitudinalement la position d'arrêt S. Puis, lorsque cet organe de commande est relâché par le pilote par rapport à l'axe de mobilité A, le pilote automatique synchronise ces consignes de vol sur la nouvelle vitesse longitudinale U_{Xn} de l'aéronef qui est décroissante afin d'atteindre la nouvelle position d'arrêt Sₙ.

De même, lors d'un appui continu sur un organe de commande par rapport à l'axe de mobilité B, l'aéronef accélère ou décélère latéralement de 1.5 kt/s tant que cet appui continu est maintenu, déplaçant ainsi latéralement la position d'arrêt S. Puis, lorsque cet organe de commande est relâché par le pilote par rapport à l'axe de mobilité B, le pilote automatique synchronise ces consignes de vol sur la nouvelle vitesse latérale V_{Yn} de l'aéronef qui est décroissante afin d'atteindre la nouvelle position d'arrêt Sₙ.

De plus, lors d'un appui continu sur un organe de commande par rapport à l'axe de mobilité C, l'aéronef accélère ou décélère verticalement de 150 pieds par minute (150 ft/mn) tant que cet appui continu est maintenu, déplaçant ainsi verticalement la position d'arrêt S. Puis, lorsque cet organe de commande est relâché par le pilote par rapport à l'axe de mobilité C, le pilote automatique synchronise les consignes de vol sur la nouvelle vitesse verticale W_{Zn} qui est décroissante afin d'atteindre la nouvelle position d'arrêt Sₙ.

Par ailleurs, lors d'un appui continu sur un organe de commande par rapport à l'axe de mobilité D, l'aéronef tourne autour de son axe de lacet avec une vitesse angulaire de 3 degrés par seconde (3°/s). Si cet appui continu est maintenu plus de trois secondes (3s), l'aéronef tourne alors autour de son axe de lacet avec une vitesse angulaire de 10°/s tant que cet appui est maintenu. Puis, lorsque cet organe de commande est relâché par le pilote par rapport à l'axe de mobilité D, le pilote automatique synchronise ces consignes de vol sur le nouveau cap ψₙ de l'aéronef, la position d'arrêt étant éventuellement modifiée si au moins une vitesse longitudinale U_{X} et latérale V_{Y} de l'aéronef est non nulle.

En outre, une impulsion sur un organe de commande par rapport à l'axe de mobilité A provoque un déplacement longitudinal de 1 mètre (1 m) de la position d'arrêt S. De même, une impulsion sur un organe de commande par rapport à l'axe de mobilité B provoque un déplacement latéral de 1 m de la position d'arrêt S ou bien de l'aéronef lorsqu'il est en vol stationnaire et une impulsion sur un organe de commande par rapport à l'axe de mobilité C provoque un déplacement vertical de 1 pied (1 ft) de la position d'arrêt S.

On considère par exemple que l'on a un appui continu sur un organe de commande dès que cet appui est maintenu pendant une durée d'au moins une seconde (1s). Une impulsion sur cet organe de commande correspond alors à un appui pendant une durée inférieure à 1s.

La présente invention a également pour objet un système de mise en vol stationnaire d'un aéronef à voilure tournante en tenue de trajectoire ou bien une tenue de cap pour un aéronef à voilure tournante, ce système de mise en vol stationnaire comportant au moins un organe de commande, muni conjointement de plusieurs axes de mobilité A,B,C,D, et un pilote automatique générateur d'ordres de commande selon des modes prédéfinis de fonctionnement et selon des consignes de vol.

Le système de mise en vol stationnaire de l'aéronef peut également comporter un premier levier de commande permettant de modifier le pas cyclique des pales principales d'un rotor principal de l'aéronef et un second levier de commande permettant de modifier le pas collectif des pales principales de ce rotor principal. Ce premier levier de commande comporte deux axes de mobilité et permet notamment de commander des mouvements de rotation de l'aéronef autour des directions longitudinale X et transversale Y. Le second levier de commande comporte un seul axe de mobilité et permet notamment de commander des mouvements de translation de l'aéronef selon la direction d'élévation Z.

Le système de mise en vol stationnaire peut ainsi mettre en oeuvre le procédé de mise en vol stationnaire en tenue de trajectoire ou bien en tenue de cap précédemment décrit.

L'invention et ses avantages apparaîtront avec plus de détails dans le cadre de la description qui suit avec des exemples de réalisation donnés à titre illustratif en référence aux figures annexées qui représentent :
- la figure 1, un aéronef équipé de commandes de vol selon l'invention,
- la figure 2, un schéma représentant l'angle de route sol et le cap de l'aéronef,
- les figures 3 et 4, deux vues de détail de leviers de commande d'un aéronef à voilure tournante.

Les éléments présents dans plusieurs figures distinctes sont affectés d'une seule et même référence.

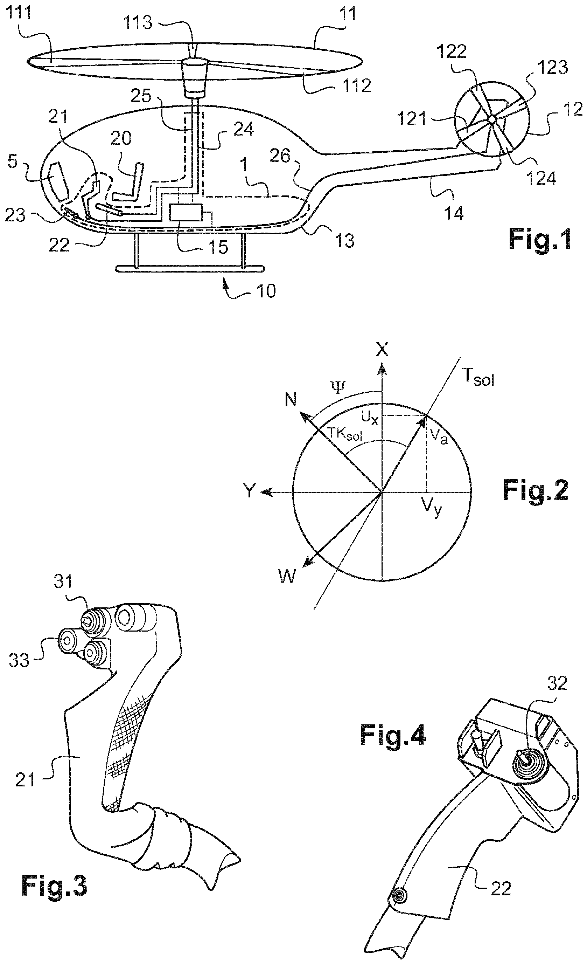

Sur la figure 1, un aéronef 10 est représenté, cet aéronef 10 comprenant un rotor principal 11 positionné au-dessus d'un fuselage 13 et un rotor arrière anticouple 12 positionné à l'extrémité arrière d'une poutre de queue 14. L'aéronef 10 comporte également un tableau de bord 5, un siège 20 sur lequel peut s'asseoir un pilote de l'aéronef 10, un pilote automatique 15 et des moyens de commande manuels, composés notamment de deux leviers de commande 21,22 et d'un palonnier 23.

De plus, un repère X,Y,Z est attaché à cet aéronef 10, et plus particulièrement à son centre de gravité. La direction longitudinale X s'étend de l'arrière de l'aéronef 10 vers l'avant de l'aéronef 10, la direction d'élévation Z s'étend de bas en haut perpendiculairement à la direction longitudinale X, la direction transversale Y s'étendant de gauche à droite perpendiculairement aux directions longitudinale X et d'élévation Z.

La direction longitudinale X est l'axe de roulis de l'aéronef 10, la direction transversale Y est son axe de tangage et la direction d'élévation Z est son axe de lacet.

Le rotor principal 11 est à axe de rotation sensiblement vertical, c'est-à-dire parallèle à la direction d'élévation Z, et est muni de trois pales principales 111,112,113 dont les pas collectif et cyclique sont variables et pilotables par l'intermédiaires des leviers de commande 21,22 et du pilote automatique 15. De même, le rotor arrière 12 est à axe de rotation sensiblement horizontal, c'est-à-dire parallèle à la direction transversale Y, et est muni de quatre pales secondaires 121,122,123,124 dont le pas collectif est variable et pilotable par l'intermédiaire du palonnier 23 et du pilote automatique 15.

Plus précisément, le premier levier de commande 21 est mobile autour des directions longitudinale et transversale X,Y et pilote le pas cyclique des pales principales 111,112,113 par l'intermédiaire d'une première chaîne cinématique de commande 24. Le second levier de commande 22 est quant à lui mobile autour de la direction transversale Y et pilote le pas collectif des pales principales 111,112,113 par l'intermédiaire d'une seconde chaîne cinématique de commande 25. De fait, une action sur ce premier levier de commande 21 permet alors de commander des mouvements de rotation de l'aéronef 10 autour des directions longitudinale X et transversale Y et une action sur ce second levier de commande permet alors de commander des mouvements de translation de l'aéronef 10 selon la direction d'élévation Z.

De même, le palonnier 23 pilote le pas collectif des pales secondaires 121,122,123,124 par l'intermédiaire d'une troisième chaîne cinématique de commande 26. De fait, une action sur ce palonnier 23 permet alors de commander des mouvements de rotation de l'aéronef 10 autour de son axe de lacet.

Ces chaînes cinématiques de commande 24,25,26 permettant d'actionner les différentes pales et peuvent être par exemple composées par des liaisons totalement mécaniques entre les moyens de commande manuels 21,22,23 et les pales. Ces chaînes cinématiques de commande 24,25,26 peuvent également être composées par des liaisons mécaniques associées à des moyens d'action hydrauliques ou bien des liaisons électriques associées à de tels moyens d'action hydrauliques.

En outre, le pilote automatique 15 permet de piloter les pas collectif et cyclique des pales principales 111,112,113 ainsi que le pas collectif des pales secondaires 121,122,123,124 en agissant respectivement sur ces chaînes cinématiques de commande 24,25,26. De fait, le pilote automatique 15 permet alors de commander des mouvements de rotation de l'aéronef 10 autour des directions longitudinale X et transversale Y et des mouvements de translation de l'aéronef 10 selon la direction d'élévation Z ainsi que des mouvements de rotation de l'aéronef 10 autour de son axe de lacet.

Les figures 3 et 4 représentent plus en détail la zone de préhension respectivement des premier et second leviers de commande 21,22. La zone de préhension de chaque levier de commande 21,22 comporte notamment un organe de commande 31,32 et un bouton poussoir 33. Chaque organe de commande 31,32 est mobile autour de deux axes de mobilité spécifiques A,B,C,D. Un premier organe de commande 31 présent sur le premier levier de commande 21 et représenté sur la figure 3 est mobile autour des deux axes de mobilité A,B. De même, un second organe de commande 32 présent sur le second levier de commande 22 et représenté sur la figure 4 est mobile autour des deux axes de mobilité C,D.

Un système de mise en vol stationnaire 1 est formé par les moyens de commande manuels 21,22,23, les organes de commande 31,32, le bouton poussoir 33, le pilote automatique 15 et les chaînes cinématiques de commande 24,25,26.

L'aéronef 10 peut voler en suivant une trajectoire Tₛₒₗ par rapport au sol, cette trajectoire Tₛₒₗ étant déterminée par rapport au sol et définie dans un repère géographique terrestre, par exemple déterminé par les points cardinaux et la direction de la gravité terrestre.

Un vol d'un aéronef 10 selon cette trajectoire Tₛₒₗ peut être caractérisé selon deux types de caractérisation par différents paramètres de cette trajectoire Tₛₒₗ.

Selon un premier type de caractérisation, un vol d'un aéronef 10 selon la trajectoire Tₛₒₗ est caractérisée par un angle de route sol TKₛₒₗ entre la direction de la trajectoire Tₛₒₗ et la direction du nord dans un plan horizontal de ce repère géographique terrestre, une vitesse d'avancement Va de l'aéronef 10, une pente P formée par l'angle entre la direction de la trajectoire Tₛₒₗ et l'orientation horizontale du repère terrestre et un cap ψ qui est l'angle formé par la projection dans un plan horizontal du repère terrestre de la direction longitudinale X de l'aéronef 10 et la direction du nord.

La vitesse d'avancement Va de l'aéronef 10 est la vitesse de l'aéronef 10 selon la direction de cette trajectoire Tₛₒₗ, cette vitesse pouvant être définie par rapport au sol ou bien par rapport à l'air. En outre, cette, vitesse d'avancement Va peut varier suivant un taux d'accélération ou de décélération Ga qui peut permettre de caractériser également cette trajectoire Tₛₒₗ en lieu et place de cette vitesse d'avancement Va selon ce premier type de caractérisation.

Selon un second type de caractérisation, un vol d'un aéronef 10 selon la trajectoire Tₛₒₗ est caractérisé par une vitesse longitudinale U_{X} selon la direction longitudinale X, une vitesse latérale V_{Y} selon la direction transversale Y et une vitesse verticale W_{Z} selon la direction d'élévation Z ainsi que par le cap ψ.

Ces vitesses longitudinale U_{X}, latérale V_{Y} et verticale W_{Z} sont respectivement une composante de la vitesse d'avancement Va de l'aéronef 10 selon les trois directions privilégiées X,Y,Z de l'aéronef 10.

La figure 2 représente une projection sur un plan horizontal de ce repère terrestre d'une trajectoire Tₛₒₗ. Les directions longitudinale et transversale X,Y de l'aéronef 10 sont également représentées ainsi que les directions N,W d'un repère géographique terrestre.

Le cap ψ est ainsi représenté entre la direction longitudinale X de l'aéronef 10 et la direction N du nord. L'angle de route sol TKₛₒₗ est représenté entre la direction de la trajectoire Tₛₒₗ et la direction N du nord.

On constate que le cap ψ est différent de l'angle de route sol TKₛₒₗ. Par suite, le nez et la poutre de queue 14 de l'aéronef 10 étant alignés sur la direction longitudinale X ne sont alors pas alignés avec la trajectoire Tₛₒₗ. De même, la vitesse d'avancement Va est alignée sur la trajectoire Tₛₒₗ et n'est pas parallèle à la direction longitudinale X.

En outre, les vitesses longitudinale U_{X} et latérale V_{Y} sont respectivement les projections de la vitesse d'avancement Va de l'aéronef 10, et de préférence de la vitesse d'avancement de l'aéronef 10 par rapport au sol, sur les directions longitudinale X et transversale Y. La vitesse verticale W_{Z} ainsi que la pente P ne sont pas représentées sur cette figure 2, qui se situe dans un plan horizontal du repère terrestre, donc perpendiculaire à la direction d'élévation Z.

L'aéronef 10 évolue généralement selon une trajectoire Tₛₒₗ afin d'atteindre un objectif au sol tel qu'un terrain d'atterrissage ou bien une position objectif de vol stationnaire.

Cependant, selon les conditions de vol de l'aéronef 10 et en particulier sa vitesse longitudinale U_{X}, les manoeuvres faites par le pilote sont différentes. En effet, lorsque l'aéronef 10 évolue à une faible vitesse longitudinale U_{X}, le pilotage de l'aéronef 10 est généralement réalisé en tenue de cap, le pilote agissant sur les paramètres de la trajectoire Tₛₒₗ selon le second type de caractérisation. Dans ce cas, le pilote commande directement les vitesses longitudinale U_{X}, latérale V_{Y} et verticale W_{Z} ainsi que le cap ψ de l'aéronef 10 afin par exemple de se déplacer à très basse vitesse longitudinale U_{X} et à basse altitude à proximité de bâtiments.

Par contre, lorsque l'aéronef 10 évolue à une vitesse longitudinale U_{X} plus importante, le pilotage de l'aéronef 10 est généralement réalisé en tenue de trajectoire, le pilote agissant sur les paramètres de la trajectoire Tₛₒₗ selon le premier type de caractérisation. Dans ce cas, le pilote préfère commander directement la vitesse d'avancement Va de l'aéronef 10 selon la trajectoire Tₛₒₗ, afin de ralentir ou d'accélérer l'aéronef 10, et l'angle de route sol TKₛₒₗ, afin de modifier cette trajectoire Tₛₒₗ, ainsi que la pente P et éventuellement le cap ψ.

Cependant, l'évolution de l'aéronef 10 selon une pente P n'a de sens qu'à partir d'une certaine vitesse d'avancement de l'ordre de 20 noeuds (20 kt). De fait, lorsque la vitesse d'avancement Va de l'aéronef 10 est inférieure à une troisième vitesse seuil Vₛₑᵤᵢₗ₃, mais dans le domaine de vitesse d'une tenue de trajectoire, le pilote de l'aéronef 10 commande la vitesse verticale W_{Z} de l'aéronef 10 en remplacement de la pente P. De fait, la consigne de vol selon la pente P est remplacée par une consigne de vol selon la vitesse verticale W_{Z} de l'aéronef 10.

Le système de mise en vol stationnaire 1 de l'aéronef 10 peut mettre en oeuvre un procédé de mise en vol stationnaire en tenue de trajectoire ou de cap permettant de réaliser automatiquement une mise en vol stationnaire de l'aéronef 10 à une position d'arrêt S selon un vol en tenue de trajectoire ou en tenue de cap en fonction de la vitesse longitudinale U_{X} de l'aéronef 10. Ce procédé de mise en vol stationnaire est engagé par l'intermédiaire du bouton 33, par exemple par un simple appui ou bien un double appui du pilote sur ce bouton 33.

Ainsi, ce procédé de mise en vol stationnaire permet de basculer en fonction de la vitesse longitudinale U_{X} de l'aéronef 10 entre un premier mode de fonctionnement des organes de commande 31,32 et du pilote automatique 15 selon le premier type de caractérisation de la trajectoire Tₛₒₗ et un second mode de fonctionnement des organes de commande 31,32 et du pilote automatique 15 selon le second type de caractérisation de la trajectoire Tₛₒₗ. Ce second mode de fonctionnement des organes de commande 31,32 et du pilote automatique 15 est ainsi utilisé pour de faibles vitesses longitudinale U_{X}, le premier mode de fonctionnement étant utilisé à des vitesses longitudinale U_{X} supérieures.

Lors de ce premier mode de fonctionnement des organes de commande 31,32 et du pilote automatique 15, le pilote automatique 15 permet à l'aéronef 10 de réaliser une mise en vol stationnaire à une position d'arrêt S, les consignes de vol du pilote automatique 15 étant l'angle de route sol TKₛₒₗ, le taux de décélération Ga de la vitesse d'avancement Va, la pente P ou bien la vitesse verticale W_{Z} le cas échéant, et le cap ψ. Par contre, lors de ce second mode de fonctionnement des organes de commande 31,32 et du pilote automatique 15, le pilote automatique 15 permet à l'aéronef 10 de réaliser une mise en vol stationnaire à cette position d'arrêt S, les consignes de vol du pilote automatique 15 étant la vitesse longitudinale U_{X}, la vitesse latérale V_{Y}, la vitesse verticale W_{Z}, ces trois vitesses U_{X}, V_{Y} et W_{Z} étant progressivement ramenées à une valeur nulle, et le cap ψ.

La position d'arrêt S est déterminée lors de l'engagement par le pilote du procédé de mise en vol stationnaire selon l'invention. Cette position d'arrêt S est alignée sur la trajectoire Tₛₒₗ suivie par l'aéronef 10 et déterminée en fonction des paramètres de cette trajectoire Tₛₒₗ ainsi que du taux de décélération prédéterminé.

Ainsi, au cours de ce premier mode de fonctionnement des organes de commande 31,32 et du pilote automatique 15, la vitesse d'avancement Va est décroissante selon le taux de décélération Ga permettant un vol en tenue de trajectoire vers cette position d'arrêt S. De plus, la consigne de vol correspondant à la pente P doit également être variable afin que l'aéronef 10 s'approche de cette position d'arrêt S selon une pente constante suivie d'un arrondi pour la mise en palier de l'aéronef 10 pour arriver à la position d'arrêt S.

De même, au cours de ce second mode de fonctionnement des organes de commande 31,32 et du pilote automatique 15, les consignes de vol correspondant aux vitesses longitudinale U_{X}, latérale V_{Y} et verticale W_{Z} sont également décroissantes selon un taux de décélération permettant un vol en tenue de cap jusqu'à la mise en vol stationnaire à la position d'arrêt S.

Le basculement entre le premier et le second mode de fonctionnement des organes de commande 31,32 et du pilote automatique 15 se fait par rapport à un seuil à hystérésis selon des vitesses seuil Vₛₑᵤᵢₗ₁ et Vₛₑᵤᵢₗ₂, la première vitesse seuil Vₛₑᵤᵢₗ₁ étant supérieure à la seconde vitesse seuil Vₛₑᵤᵢₗ₂.

Les vitesses seuil Vₛₑᵤᵢₗ₁ et Vₛₑᵤᵢₗ₂ peuvent être fonction des conditions de vol de l'aéronef 10, essentiellement de la vitesse et la direction du vent ainsi que la vitesse latérale V_{Y} de l'aéronef 10.

En outre, au cours de ces deux modes de fonctionnement des organes de commande 31,32 et du pilote automatique 15, un pilotage par transparence est possible afin de modifier la position de la position d'arrêt S et éventuellement d'ajuster la trajectoire Tₛₒₗ. De telles modifications sont notamment nécessaires lors d'un vol à vue et à basse altitude et en fonction de l'environnement et/ou des conditions climatiques.

Ainsi, le pilote peut commander directement un déplacement de cette position d'arrêt S afin de la faire coïncider avec la position objectif de vol stationnaire en modifiant un ou plusieurs paramètres de la trajectoire Tₛₒₗ par l'intermédiaire des organes de commande 31,32 et par l'intermédiaire du pilote automatique 15.

Ce procédé de mise en vol stationnaire permet, au cours de ce premier mode de fonctionnement des organes de commande 31,32 et du pilote automatique 15, à l'aéronef 10 de s'approcher d'une position d'arrêt S avec une tenue de la trajectoire Tₛₒₗ en modifiant le taux de décélération Ga de la vitesse d'avancement Va, l'angle de route sol TKₛₒₗ, la pente P ou bien la vitesse verticale W_{Z} le cas échéant et éventuellement le cap ψ déplaçant ainsi cette position d'arrêt S par l'intermédiaire des organes de commande 31,32 et du pilote automatique 15 qui agit sur les différents paramètres de vol.

De même, ce procédé de mise en vol stationnaire permet, au cours de ce second mode de fonctionnement des organes de commande 31,32 et du pilote automatique 15, de réaliser une mise en vol stationnaire avec une tenue de cap vers la position d'arrêt S en modifiant la vitesse longitudinale U_{X}, la vitesse latérale V_{Y}, la vitesse verticale W_{Z} et le cap ψ déplaçant ainsi cette position d'arrêt S par l'intermédiaire des organes de commande 31,32 et du pilote automatique 15 qui agit sur les différents paramètres de vol.

De fait, chaque action du pilote sur un des organes de commande 31,32 par rapport à un axe A,B,C,D de mobilité modifie par l'intermédiaire du pilote automatique 15 la position d'arrêt S.

Ainsi, en tenue de trajectoire, une action du pilote sur un des organes de commande 31,32 par rapport à l'axe A,B,C de mobilité conduit à un déplacement de la position d'arrêt S sur la trajectoire Tₛₒₗ, horizontalement sans changement de la distance entre la position courante de l'aéronef 10 et cette position d'arrêt S et verticalement en modifiant respectivement le taux de décélération Ga de la vitesse d'avancement Va, l'angle de route sol TKₛₒₗ, la pente P ou bien de la vitesse verticale W_{Z} le cas échéant. De plus, la position d'arrêt S peut également être déplacée horizontalement sans changement de la distance entre la position courante de l'aéronef 10 et cette position d'arrêt S en modifiant l'angle de route sol TKₛₒₗ par une action du pilote sur un des organes de commande 31,32 par rapport à l'axe B de mobilité. Le cap ψ peut être quant à lui modifié par une action du pilote sur le palonnier 23, mais sans effet directe sur la position d'arrêt S.

Par contre, en tenue de cap, une action du pilote sur un des organes de commande 31,32 par rapport à l'axe A,B,C,D de mobilité conduit à un déplacement de la position d'arrêt S selon les directions privilégiées X,Y,Z en modifiant respectivement la vitesse longitudinale U_{X}, la vitesse latérale V_{Y}, la vitesse verticale W_{Z} et le cap ψ.

Bien entendu, le pilote peut agir simultanément sur un seul ou les deux organes de commande 31,32 et par rapport à plusieurs axes de mobilité A,B,C,D, afin de générer des déplacement de la position d'arrêt dans plusieurs directions en modifiant plusieurs paramètres de la trajectoire T_{sol.}

Le pilote automatique 15 prend en compte les actions du pilote sur les organes de commande 31,32, modifie ses consignes de vol en fonction de ces actions et génère alors des ordres de commande afin de modifier les pas des pales principales 111,112,113 du rotor principal 11 et éventuellement les pas des pales secondaires 121,122,123,124 du rotor arrière 12. L'aéronef 10 suit alors une nouvelle trajectoire T_{soln,} dont un ou plusieurs paramètres ont été modifiés comme demandé par le pilote afin de réaliser une mise en vol stationnaire vers une nouvelle position d'arrêt Sₙ, ces paramètres modifiés étant les nouvelles consignes de vol du pilote automatique 15.

De fait, lors de chaque action du pilote sur un des organes de commande 31,32, de nouvelles consignes de vol du pilote automatique 15 peuvent être synchronisées sur les paramètres de la nouvelle trajectoire Tₛₒₗₙ et afin d'atteindre la nouvelle position d'arrêt Sₙ. Les paramètres de la nouvelle trajectoire Tₛₒₗₙ, sont un nouvel angle de route sol TKₛₒₗₙ, un nouveau taux de décélération Ga de la vitesse d'avancement Vaₙ, une nouvelle pente Pₙ et/ou un nouveau cap ψₙ au cours du premier mode de fonctionnement des organes de commande 31,32 et du pilote automatique 15, et une nouvelle vitesse longitudinale U_{Xn}, une nouvelle vitesse latérale V_{Yn}, une nouvelle vitesse verticale W_{Zn} et/ou un nouveau cap ψₙ au cours du second mode de fonctionnement des organes de commande 31,32 et du pilote automatique 15.

En outre, le premier levier de commande 21 peut être utilisé en tant que premier organe de commande 31 et le second levier de commande 22 est utilisé en tant que second organe de commande 32.

Cependant, une telle utilisation particulière des leviers de commande 21,22 n'est pas adaptée pour réaliser de façon urgente une manoeuvre soudaine de l'aéronef 10 afin par exemple d'éviter un obstacle se trouvant sur la trajectoire Tₛₒₗ ou bien à proximité de celle-ci. En effet, les premier et second leviers de commande 21,22 ne permettent alors pas de réaliser rapidement un déplacement vertical ou latéral de l'aéronef 10.

De fait, la tenue de la consigne de la pente P ou bien de la vitesse verticale W_{Z} le cas échéant par l'intermédiaire du pilote automatique 15 est désactivée dès qu'une action brutale du pilote sur le premier levier de commande 21 est détectée en vol d'avancement en tenue de trajectoire. Par suite, le pilote peut commander le pas cyclique longitudinal afin d'agir sur l'aéronef 10 en rotation autour de l'axe de tangage et éventuellement le pas collectif afin d'agir sur l'aéronef 10 en translation selon la direction d'élévation Z et ainsi réaliser la manoeuvre d'évitement nécessaire.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Notamment, l'aéronef 10 équipé de ce système de mise en vol stationnaire 1 n'est pas limité à l'aéronef 10 représenté sur la figure 1. Cet aéronef 10 peut par exemple comporter deux rotors principaux ou bien être un hélicoptère hybride.

De plus, le nombre de pales principales 111,112,113 d'un rotor principal 11 ainsi que le nombre de pales secondaires 121,122,123,124 d'un rotor arrière 12 ne sont pas limités à l'exemple d'aéronef 10 représenté sur la figure 1. Un rotor principal 11 ou un rotor arrière 12 peut en effet comporter deux, trois, quatre, cinq pales, voire plus de cinq pales.

## Revendications

1. Procédé de mise en vol stationnaire d'un aéronef à voilure tournante (10), ledit aéronef (10) suivant une trajectoire Tₛₒₗ par rapport au sol avec une vitesse d'avancement Va, une direction longitudinale X s'étendant de l'arrière dudit aéronef (10) vers l'avant dudit aéronef (10), une direction d'élévation Z s'étendant de bas en haut perpendiculairement à ladite direction longitudinale X et une direction transversale Y s'étendant de gauche à droite perpendiculairement auxdites directions longitudinale X et d'élévation Z, ledit aéronef (10) comportant :
- au moins une voilure tournante (11) munie de plusieurs pales principales (111,112,113) dont le pas collectif et le pas cyclique sont variables autour d'un axe de pas, ledit aéronef (10) étant capable d'effectuer des mouvements de rotation autour desdites directions X,Y,Z et de translation selon lesdites directions X,Y,Z,
- un pilote automatique (15) générateur d'ordres de commande selon des modes prédéfinis de fonctionnement et selon des consignes de vol, lesdits ordres de commande pouvant provoquer lesdits mouvements dudit aéronef (10) en rotation et/ou en translation selon lesdites directions X,Y,Z, et
- des commandes de vol comportant au moins un organe de commande (31,32) muni conjointement de plusieurs axes de mobilité A,B,C,D,
**caractérisé en ce que**
- on applique un premier mode de fonctionnement desdits organes de commande (31,32) et dudit pilote automatique lorsqu'une vitesse longitudinale U_{X} dudit aéronef (10) est supérieure à une première vitesse seuil Vₛₑᵤᵢₗ₁, ladite vitesse longitudinale U_{X} étant une projection de ladite vitesse d'avancement Va sur ladite direction longitudinale X, ledit pilote automatique (15) permettant alors audit aéronef (10) de s'approcher d'une position d'arrêt S déterminée lors de l'engagement dudit procédé avec une tenue de trajectoire, lesdites consignes de vol dudit pilote automatique (15) étant un angle de route sol TKₛₒₗ, un taux de décélération Ga de ladite vitesse d'avancement Va, une pente P et un cap ψ, et
- on applique un second mode de fonctionnement desdits organes de commande (31,32) et dudit pilote automatique lorsque ladite vitesse longitudinale U_{X} est inférieure à une seconde vitesse seuil Vₛₑᵤᵢₗ₂, ladite première vitesse seuil Vₛₑᵤᵢₗ₁ étant supérieure à ladite seconde vitesse seuil Vₛₑᵤᵢₗ₂, ledit pilote automatique (15) permettant alors audit aéronef (10) de réaliser une mise en vol stationnaire avec une tenue de cap vers ladite position d'arrêt S, lesdites consignes de vol dudit pilote automatique (15) étant ladite vitesse longitudinale U_{X}, une vitesse latérale V_{Y} et une vitesse verticale W_{Z} et un cap ψ, lesdites vitesses longitudinale, latérale et verticale U_{X},V_{Y},W_{Z} variant vers une vitesse nulle.

2. Procédé de mise en vol stationnaire d'un aéronef à voilure tournante (10) selon la revendication 1,
**caractérisé en ce que**
- ledit premier mode de fonctionnement desdits organes de commande (31,32) et dudit pilote automatique (15) reste engagé tant que ladite vitesse longitudinale U_{X} est supérieure ou égale à ladite seconde vitesse seuil Vₛₑᵤᵢₗ₂, et
- ledit second mode de fonctionnement desdits organes de commande (31,32) et dudit pilote automatique (15) reste engagé tant que ladite vitesse longitudinale U_{X} est inférieure ou égale à ladite première vitesse seuil Vₛₑᵤᵢₗ₁.

3. Procédé de mise en vol stationnaire d'un aéronef à voilure tournante (10) selon l'une quelconque des revendications 1 à 2, **caractérisé en ce qu'**au cours dudit premier mode de fonctionnement desdits organes de commande (31,32) et dudit pilote automatique (15),
- on peut commander indépendamment par transparence afin de définir une nouvelle position d'arrêt Sₙ dudit aéronef (10) une modification de :
∘ ledit taux de décélération Ga de ladite vitesse d'avancement Va par une première action selon un premier axe A de mobilité d'un organe de commande (31,32) et par l'intermédiaire dudit pilote automatique (15) générant un déplacement de ladite position d'arrêt S sur ladite trajectoire Tₛₒₗ,
∘ ledit angle de route sol TKₛₒₗ par une seconde action selon un second axe B de mobilité d'un organe de commande (31,32) et par l'intermédiaire dudit pilote automatique (15) générant un déplacement de ladite position d'arrêt S dans un plan horizontal, et/ou
∘ ladite pente P par une troisième action selon un troisième axe C de mobilité d'un organe de commande (31,32) et par l'intermédiaire dudit pilote automatique (15) générant une modification de l'altitude de ladite position d'arrêt S, et
- on synchronise lesdites consignes de vol dudit pilote automatique (15), afin de s'approcher de ladite nouvelle position d'arrêt Sₙ avec une tenue de trajectoire, lesdites consignes de vol étant entre autres un nouvel angle de route sol TKₛₒₗₙ, un nouveau taux de décélération Gaₙ de ladite vitesse d'avancement Va, une nouvelle pente Pₙ et/ou un nouveau cap ψₙ.

4. Procédé de mise en vol stationnaire d'un aéronef à voilure tournante (10) selon la revendication 3,
**caractérisé en ce qu'**au cours dudit premier mode de fonctionnement desdits organes de commande (31,32) et dudit pilote automatique,
- on peut commander par transparence une modification dudit angle de route sol TKₛₒₗ par une quatrième action selon un quatrième axe D de mobilité d'un organe de commande (31,32) et par l'intermédiaire dudit pilote automatique (15) générant un déplacement de ladite position d'arrêt S dans un plan horizontal afin de définir une nouvelle position d'arrêt Sₙ sans modifier ledit taux de décélération Ga de ladite vitesse d'avancement Va et ladite pente P et,
- on synchronise lesdites consignes de vol dudit pilote automatique (15), afin de s'approcher de ladite nouvelle position d'arrêt Sₙ avec une tenue de trajectoire, lesdites consignes de vol étant entre autres un nouvel angle de route sol TKₛₒₗₙ.

5. Procédé de mise en vol stationnaire d'un aéronef à voilure tournante (10) selon l'une quelconque des revendications 1 à 4,
**caractérisé en ce qu'**au cours dudit premier mode de fonctionnement desdits organes de commande (31,32) et dudit pilote automatique, ledit taux de décélération Ga de ladite vitesse d'avancement Va est compris dans un intervalle prédéfini.

6. Procédé de mise en vol stationnaire d'un aéronef à voilure tournante (10) selon l'une quelconque des revendications 1 à 5,
**caractérisé en ce que**, si ladite vitesse d'avancement Va est inférieure à une troisième vitesse seuil Vₛₑᵤᵢₗ₃, ladite pente P est remplacée par ladite vitesse verticale W_{z} comme consigne de vol dudit pilote automatique (15) au cours dudit premier mode de fonctionnement desdits organes de commande (31,32) et dudit pilote automatique (15).

7. Procédé de mise en vol stationnaire d'un aéronef à voilure tournante (10) selon l'une quelconque des revendications 1 à 6,
**caractérisé en ce qu'**au cours dudit second mode de fonctionnement desdits organes de commande (31,32) et dudit pilote automatique (15),
- on peut commander indépendamment par transparence afin de définir une nouvelle position d'arrêt Sₙ dudit aéronef (10) une modification de :
∘ ladite vitesse longitudinale U_{X} par une première action selon un premier axe A de mobilité d'un organe de commande (31,32) et par l'intermédiaire dudit pilote automatique (15) générant un déplacement longitudinal de ladite position d'arrêt S,
∘ ladite vitesse latérale V_{Y} par une seconde action selon un second axe B de mobilité d'un organe de commande (31,32) et par l'intermédiaire dudit pilote automatique (15) générant un déplacement latéral de ladite position d'arrêt S, et/ou
∘ ladite vitesse verticale W_{Z} par une troisième action selon un troisième axe C de mobilité d'un organe de commande (31,32) et par l'intermédiaire dudit pilote automatique (15) générant un déplacement vertical de ladite position d'arrêt S,
- on synchronise lesdites consignes de vol dudit pilote automatique (15) afin de réaliser une mise en vol stationnaire vers ladite nouvelle position d'arrêt Sₙ avec une tenue de cap, lesdites consignes de vol étant entre autres une nouvelle vitesse longitudinale U_{Xn}, une vitesse latérale V_{Y} et/ou une vitesse verticale W_{Z} décroissantes vers une valeur nulle.

8. Procédé de mise en vol stationnaire d'un aéronef à voilure tournante (10) selon l'une quelconque des revendications 1 à 6, **caractérisé en ce qu'**au cours dudit second mode de fonctionnement desdits organes de commande (31,32) et dudit pilote automatique (15),
- on peut commander indépendamment par transparence afin de définir une nouvelle position d'arrêt Sₙ dudit aéronef (10) une modification de :
∘ un déplacement longitudinal de ladite position d'arrêt S par une première action selon un premier axe A de mobilité d'un organe de commande (31,32) et par l'intermédiaire dudit pilote automatique (15),
∘ un déplacement latéral de ladite position d'arrêt S par une seconde action selon un second axe B de mobilité d'un organe de commande (31,32) et par l'intermédiaire dudit pilote automatique (15), et/ou
∘ un déplacement vertical de ladite position d'arrêt S par une troisième action selon un troisième axe C de mobilité d'un organe de commande (31,32) et par l'intermédiaire dudit pilote automatique (15),
- on synchronise lesdites consignes de vol dudit pilote automatique (15) afin de réaliser une mise en vol stationnaire vers ladite nouvelle position d'arrêt Sₙ avec une tenue de cap, lesdites consignes de vol étant entre autres une nouvelle vitesse longitudinale U_{Xn}, une vitesse latérale V_{Y} et/ou une vitesse verticale W_{Z} décroissantes vers une valeur nulle.

9. Procédé de mise en vol stationnaire d'un aéronef à voilure tournante (10) selon l'une quelconque des revendications 7 à 8,
**caractérisé en ce qu'**au cours dudit second mode de fonctionnement desdits organes de commande (31,32) et dudit pilote automatique,
- on peut commander par transparence un changement de cap ψ par une quatrième action selon un quatrième axe D de mobilité d'un organe de commande (31,32) et par l'intermédiaire dudit pilote automatique (15) indépendamment desdites vitesses U_{X},V_{Y},W_{Z} et pouvant conduire à un déplacement de ladite position d'arrêt S et
- on synchronise lesdites consignes de vol dudit pilote automatique (15) afin de réaliser une mise en vol stationnaire vers ladite position d'arrêt S avec une tenue de cap, lesdites consignes de vol étant entre autres un nouveau cap ψₙ.

10. Procédé de mise en vol stationnaire d'un aéronef à voilure tournante (10) selon l'une quelconque des revendications 1 à 9,
**caractérisé en ce que** ledit aéronef (10) comportant d'une part un premier levier de commande (21) permettant de commander des mouvements de rotation dudit aéronef (10) autour desdites directions longitudinale X et transversale Y et d'autre part un second levier de commande (22) permettant de commander des mouvements de translation dudit aéronef (10) selon ladite direction d'élévation Z, un premier organe de commande (31) est ledit premier levier de commande (21) et un second organe de commande (32) est ledit second levier de commande (22), ledit premier organe de commande (31) comportant ledit premier axe A de mobilité et ledit second axe B de mobilité, ledit second organe de commande (32) comportant ledit troisième axe C de mobilité.

11. Procédé de mise en vol stationnaire d'un aéronef à voilure tournante (10) selon la revendication 10,
**caractérisé en ce qu'**une action brutale sur ledit premier levier de commande (21) entraine une désactivation de la tenue de ladite consigne de ladite pente P par l'intermédiaire dudit pilote automatique (15), ledit premier levier de commande (21) commandant alors des mouvements de rotation dudit aéronef (10) autour de ladite direction longitudinale X et ledit second levier de commande (22) commandant des mouvements de translation dudit aéronef (10) selon ladite direction d'élévation Z.

12. Procédé de mise en vol stationnaire d'un aéronef à voilure tournante (10) selon l'une quelconque des revendications 1 à 11,
**caractérisé en ce que** ledit aéronef (10) comportant d'une part un premier levier de commande (21) permettant de commander des mouvements de rotation dudit aéronef (10) autour desdites directions longitudinale X et transversale Y et d'autre part un second levier de commande (22) permettant de commander des mouvements de translation dudit aéronef (10) selon ladite direction d'élévation Z, un premier organe de commande (31) est positionné sur ledit premier levier de commande (21) et un second organe de commande (32) est positionné sur ledit second levier de commande (22), ledit premier organe de commande (31) comportant ledit premier axe A de mobilité et ledit second axe B de mobilité, ledit second organe de commande (32) comportant ledit troisième axe C de mobilité.

13. Procédé de mise en vol stationnaire pour aéronef à voilure tournante (10) selon la revendication 12,
**caractérisé en ce que** ledit second organe de commande (32) comporte un quatrième axe (D) de mobilité.

14. Procédé de mise en vol stationnaire d'un aéronef à voilure tournante (10) selon l'une quelconque des revendications 1 à 13,
**caractérisé en ce que** lesdits organes de commande (31,32) sont calibrés et commandent des mouvements précis dudit aéronef (10).

15. Procédé de mise en vol stationnaire d'un aéronef à voilure tournante (10) selon l'une quelconque des revendications 1 à 14, **caractérisé en ce que** lesdites première et seconde vitesses seuil Vₛₑᵤᵢₗ₁,Vₛₑᵤᵢₗ₂ sont fonction de la vitesse et de la direction du vent ainsi que de ladite vitesse latérale V_{Y}.

16. Système de mise en vol stationnaire (1) pour aéronef à voilure tournante (10), ledit aéronef (10) suivant une trajectoire Tₛₒₗ, par rapport au sol avec une vitesse d'avancement Va,
- ledit aéronef (10) comportant
o une direction longitudinale X s'étendant de l'arrière dudit aéronef (10) vers l'avant dudit aéronef (10), une direction d'élévation Z s'étendant de bas en haut perpendiculairement à ladite direction longitudinale X et une direction transversale Y s'étendant de gauche à droite perpendiculairement auxdites directions longitudinale X et d'élévation Z,
o au moins une voilure tournante (11) munie de plusieurs pales principales (111,112,113) dont le pas collectif et le pas cyclique sont variables autour d'un axe de pas, ledit aéronef (10) étant capable d'effectuer des mouvements de rotation autour desdites directions X,Y,Z et de translation selon lesdites directions X,Y,Z, et
- ledit système de mise en vol stationnaire (1) comportant
∘ au moins un organe de commande (31,32) muni conjointement de plusieurs axes de mobilité A,B,C,D,
∘ un pilote automatique (15) générateur d'ordres de commande selon des modes prédéfinis de fonctionnement, lesdits ordres de commande pouvant provoquer lesdits mouvements dudit aéronef (10) en rotation et/ou en translation selon lesdites directions X,Y,Z,
**caractérisé en ce que** ledit système de mise en vol stationnaire (1) est capable de mettre en oeuvre le procédé de mise en vol stationnaire d'un aéronef à voilure tournante (10) selon l'une quelconque des revendications 1 à 15.

## Patentansprüche

1. Verfahren zur Durchführung eines Schwebeflugs eines Drehflügelflugzeugs (10), wobei das Flugzeug (10) einer Flugbahn Tₛₒₗ über dem Boden mit einer Vortriebsgeschwindigkeit Va folgt, wobei eine Längsrichtung X sich vom Heck des Flugzeugs (10) zum Bug des Flugzeugs (10) erstreckt, eine Höhenrichtung Z sich von unten nach oben senkrecht zu der Längsrichtung X erstreckt, und eine Querrichtung Y sich von rechts nach links senkrecht zu der Längsrichtung X und der Höhenrichtung Z erstreckt, wobei das Flugzeug (10) aufweist:
- mindestens einen Drehflügel (11), der mit mehreren Hauptrotorblättern (111, 112, 113) versehen ist, deren kollektive Rotorblattverstellung und deren periodische Rotorblattverstellung um eine Verstellachse veränderbar sind, wobei das Flugzeug (10) in der Lage ist, Rotationsbewegungen um die Richtungen X, Y, Z und Translationsbewegungen entlang den Richtungen X, Y, Z auszuführen,
- einen Autopiloten (15), der Steuerbefehle gemäß vordefinierten Betriebsmodi und gemäß Fluganweisungen erzeugt, wobei die Steuerbefehle die genannten Bewegungen des Flugzeugs (10) als Rotationsbewegungen um die Richtungen X, Y, Z und/oder als Translationsbewegungen entlang den Richtungen X, Y, Z bewirken können, und
- Flugsteuerungen, die mindestens ein Steuerelement (31, 32) aufweisen, das gemeinsam mit mehreren Beweglichkeitsachsen A, B, C, D versehen ist,
**dadurch gekennzeichnet, dass**
- ein erster Betriebsmodus der Steuerelemente (31, 32) und des Autopiloten durchgeführt wird, wenn eine Längsgeschwindigkeit Uₓ des Flugzeugs (10) größer als ein erster Geschwindigkeitsschwellenwert Vₛₑᵤᵢₗ₁ ist, wobei die Längsgeschwindigkeit Uₓ eine Projektion der Vortriebsgeschwindigkeit Va auf die Längsrichtung X ist, wobei der Autopilot (15) es dem Flugzeug (10) ermöglicht, sich einer Stillstandsposition S zu nähern, die während der Durchführung des Verfahrens bestimmt wird, mit einer Spurhaltung der Flugbahn, wobei die Fluganweisungen des Autopiloten (15) ein Kurswinkel TKₛₒₗ relativ zum Boden, eine Verzögerungsrate Ga der Vortriebsgeschwindigkeit Va, ein Neigungswinkel P und ein Kurs ψ sind, und
- ein zweiter Betriebsmodus der Steuerelemente (31, 32) und des Autopiloten durchgeführt wird, wenn die Längsgeschwindigkeit Uₓ kleiner als ein zweiter Geschwindigkeitsschwellenwert Vₛₑᵤᵢₗ₂ ist, wobei der erste Geschwindigkeitsschwellenwert Vₛₑᵤᵢₗ₁ größer als der zweite Geschwindigkeitsschwellenwert Vₛₑᵤᵢₗ₂ ist, wobei es der Autopilot (15) dem Flugzeug (10) somit ermöglicht, einen Schwebeflug durchzuführen in Richtung auf die Stillstandsposition S unter Beibehaltung der Flugbahn, wobei die Fluganweisungen des Autopiloten (15) die Längsgeschwindigkeit Uₓ, eine seitliche Geschwindigkeit V_{y} und eine senkrechte Geschwindigkeit W_{z} und ein Kurs ψ sind, wobei sich die Längs-, Quer- und vertikalen Geschwindigkeiten Uₓ, V_{y}, W_{z} zu einer Geschwindigkeit Null hin verändern.

2. Verfahren zur Durchführung eines Schwebeflugs eines Drehflügelflugzeugs (10) nach Anspruch 1,
**dadurch gekennzeichnet, dass**
- der erste Betriebsmodus der Steuerelemente (31, 32) und des Autopiloten (15) aufrechterhalten wird, bis die Längsgeschwindigkeit Uₓ größer oder gleich einem zweiten Geschwindigkeitsschwellenwert Vₛₑᵤᵢₗ₂ ist, und
- der zweite Betriebsmodus der Steuerelemente (31, 32) und des Autopiloten (15) aufrechterhalten bleibt, bis die Längsgeschwindigkeit Uₓ kleiner oder gleich dem ersten Geschwindigkeitsschwellenwert Vₛₑᵤᵢₗ₁ ist.

3. Verfahren zur Durchführung eines Schwebeflugs eines Drehflügelflugzeugs (10) nach einem der Ansprüche 1 bis 2,
**dadurch gekennzeichnet, dass** während des ersten Betriebsmodus der Steuerelemente (31, 32) und des Autopiloten (15):
- man, um eine neue Stillstandsposition Sₙ des Flugzeugs (10) zu definieren, unabhängig und nachvollziehbar eine Änderung steuern kann von
o der Verzögerungsrate Ga der Vortriebsgeschwindigkeit Va durch eine erste Maßnahme entlang einer ersten Beweglichkeitsachse A eines Steuerelements (31, 32) und durch den Autopiloten (15), was eine Verschiebung der Stillstandsposition S auf der Flugbahn Tₛₒₗ bewirkt,
o dem Kurswinkel TKₛₒₗ bezüglich des Bodens durch eine zweite Maßnahme entlang einer zweiten Beweglichkeitsachse B eines Steuerelements (31, 32) und durch den Autopiloten (15), was eine Verschiebung der Stillstandsposition S in einer horizontalen Ebene bewirkt, und/oder
o der Neigung P durch eine dritte Maßnahme entlang einer dritten Beweglichkeitsachse C eines Steuerelements (31, 32) und durch den Autopiloten (15), was eine Veränderung der Höhe der Stillstandsposition S bewirkt, und
- man die Fluganweisungen des Autopiloten (15) synchronisiert, um sich der neuen Stillstandsposition Sₙ unter Beibehaltung der Flugbahn zu nähern, wobei die Fluganweisungen unter anderem ein neuer Kurswinkel TKₛₒₗₙ bezüglich des Bodens, eine neue Verzögerungsrate Gaₙ der Vortriebsgeschwindigkeit Va, eine neue Neigung Pₙ und/oder ein neuer Kurs ψₙ sind.

4. Verfahren zur Durchführung eines Schwebeflugs eines Drehflügelflugzeugs (10) nach Anspruch 3,
**dadurch gekennzeichnet, dass** während des ersten Betriebsmodus der Steuerelemente (31, 32) und des Autopiloten
- man nachvollziehbar eine Änderung des Kurswinkels TKₛₒₗ bezüglich des Bodens durch eine vierte Maßnahme entlang einer vierten Beweglichkeitsachse D eines Steuerelements (31, 32) und durch den Autopiloten (15) steuern kann, was eine Verschiebung der Stillstandsposition S in einer horizontalen Ebene bewirkt, um eine neue Stillstandsposition Sₙ zu definieren, ohne die Verzögerungsrate Ga der Vortriebsgeschwindigkeit Va und der Neigung P zu ändern, und
- man die Fluganweisungen des Autopiloten (15) synchronisiert, um sich der neuen Stillstandsposition Sₙ unter Beibehaltung der Flugbahn zu nähern, wobei die Fluganweisungen unter anderem ein neuer Kurswinkel TKₛₒₗₙ bezüglich des Bodens sind.

5. Verfahren zur Durchführung eines Schwebeflugs eines Drehflügelflugzeugs (10) nach einem der Ansprüche 1 bis 4,
**dadurch gekennzeichnet, dass** während des ersten Betriebsmodus der Steuerelemente (31, 32) und des Autopiloten die Verzögerungsrate Ga der Vortriebsgeschwindigkeit Va in einem vorbestimmten Intervall liegt.

6. Verfahren zur Durchführung eines Schwebeflugs eines Drehflügelflugzeugs (10) nach einem der Ansprüche 1 bis 5,
**dadurch gekennzeichnet, dass**, wenn die Vortriebsgeschwindigkeit Va kleiner ist als ein dritter Geschwindigkeitsschwellenwert Vₛₑᵤᵢₗ₃, die Neigung P durch die senkrechte Geschwindigkeit W_{z} als Fluganweisung des Autopiloten (15) während des ersten Betriebsmodus der Steuerelemente (31, 32) und des Autopiloten (15) ersetzt wird.

7. Verfahren zur Durchführung eines Schwebeflugs eines Drehflügelflugzeugs (10) nach einem der Ansprüche 1 bis 6,
**dadurch gekennzeichnet, dass** während des zweiten Betriebsmodus der Steuerelemente (31, 32) und des Autopiloten (15),
- man, um eine neue Stillstandsposition Sₙ des Flugzeugs (10) zu definieren, unabhängig und nachvollziehbar eine Änderung anordnen kann von
∘ der Längsgeschwindigkeit Uₓ durch eine erste Maßnahme entlang einer ersten Beweglichkeitsachse A eines Steuerelements (31, 32) und durch den Autopiloten (15), was zu einer Längsverschiebung der Stillstandsposition S führt,
∘ der seitlichen Geschwindigkeit V_{y} durch eine zweite Maßnahme entlang einer zweiten Beweglichkeitsachse B eines Steuerelements (31, 32) und durch den Autopiloten (15), was zu einer seitlichen Verschiebung der Stillstandsposition S führt, und/oder
∘ der senkrechten Geschwindigkeit W_{z} durch eine dritte Maßnahme entlang einer dritten Beweglichkeitsachse C eines Steuerelements (31, 32) und durch den Autopiloten (15), was zu einer senkrechten Verschiebung der Stillstandsposition S führt,
- man die Fluganweisungen des Autopiloten (15) synchronisiert, um eine Durchführung eines Schwebeflugs in Richtung auf die neue Stillstandsposition Sₙ unter Beibehaltung des Kurses zu realisieren, wobei die Fluganweisungen unter anderem eine neue Längsgeschwindigkeit U_{Xn}, eine seitliche Geschwindigkeit V_{Y} und/oder eine senkrechte Geschwindigkeit W_{z} sind, die auf einen Wert Null hin abnehmen.

8. Verfahren zur Durchführung eines Schwebeflugs eines Drehflügelflugzeugs (10) nach einem der Ansprüche 1 bis 6,
**dadurch gekennzeichnet, dass** während des zweiten Betriebsmodus der Steuerelemente (31, 32) und des Autopiloten (15):
- man, um eine neue Stillstandsposition Sₙ des Flugzeugs (10) zu definieren, unabhängig und nachvollziehbar eine Änderung anordnen kann von
∘ einer Längsverschiebung der Stillstandsposition S durch eine erste Maßnahme entlang einer ersten Beweglichkeitsachse A eines Steuerelements (31, 32) und durch den Autopiloten (15),
∘ einer seitlichen Verschiebung der Stillstandsposition S durch eine zweite Maßnahme entlang einer zweiten Beweglichkeitsachse B eines Steuerelements (31, 32) und durch den Autopiloten (15), und/oder
∘ einer senkrechten Verschiebung der Stillstandsposition S durch eine dritte Maßnahme entlang einer dritten Beweglichkeitsachse C eines Steuerelements (31, 32) und durch den Autopiloten (15),
- man die Fluganweisungen des Autopiloten (15) synchronisiert, um eine Durchführung eines Schwebeflugs in Richtung auf die neue Stillstandsposition Sₙ unter Beibehaltung des Kurses zu realisieren, wobei die Fluganweisungen unter anderem eine neue Längsgeschwindigkeit U_{Xn}, eine seitliche Geschwindigkeit V_{Y} und/oder eine senkrechte Geschwindigkeit W_{Z} sind, die auf einen Wert Null hin abnehmen.

9. Verfahren zur Durchführung eines Schwebeflugs eines Drehflügelflugzeugs (10) gemäß einem der Ansprüche 7 bis 8,
**dadurch gekennzeichnet, dass** während des zweiten Betriebsmodus der Steuerelemente (31, 32) und des Autopiloten
- man nachvollziehbar eine Änderung des Kurses ψ anordnen kann durch eine vierte Maßnahme entlang einer vierten Beweglichkeitsachse D eines Steuerelements (31, 32) und durch den Autopiloten (15), unabhängig von den Geschwindigkeiten U_{X}, V_{Y}, W_{Z}, und was zu einer Verschiebung der Stillstandsposition S führen kann, und
- man die Fluganweisungen des Autopiloten (15) synchronisiert, um eine Durchführung eines Schwebeflugs in Richtung auf die Stillstandsposition S unter Beibehaltung des Kurses zu realisieren, wobei die Fluganweisungen unter anderem ein neuer Kurs ψₙ sind.

10. Verfahren zur Durchführung eines Schwebeflugs eines Drehflügelflugzeugs (10) nach einem der Ansprüche 1 bis 9,
**dadurch gekennzeichnet, dass** das Flugzeug (10) einerseits einen ersten Steuerknüppel (21) aufweist, der es erlaubt, Drehbewegungen des Flugzeugs (10) um die Längsrichtung X und die Querrichtung Y zu steuern, und andererseits einen zweiten Steuerknüppel (22) aufweist, der es erlaubt, Translationsbewegungen des Flugzeugs (10) in der Höhenrichtung Z zu steuern, wobei ein erstes Steuerelement (31) der erste Steuerknüppel (21) ist und ein zweites Steuerelement (32) der zweite Steuerknüppel (22) ist, wobei das erste Steuerelement (31) die erste Beweglichkeitsachse A und die zweite Beweglichkeitsachse B aufweist, wobei das zweite Steuerelement (32) die dritte Beweglichkeitsachse C aufweist.

11. Verfahren zur Durchführung eines Schwebeflugs eines Drehflügelflugzeugs (10) nach Anspruch 10,
**dadurch gekennzeichnet, dass** eine brachiale Betätigung des ersten Steuerknüppels (21) zu einer Desaktivierung des Beibehaltens des Sollwerts der Neigung P durch den Autopiloten (15) führt, wobei der erste Steuerknüppel (21) somit Rotationsbewegungen des Flugzeugs (10) um die Längsrichtung X steuert, und der zweite Steuerknüppel (22) Translationsbewegungen des Flugzeugs (10) entlang der Höhenrichtung Z steuert.

12. Verfahren zur Durchführung eines Schwebeflugs eines Drehflügelflugzeugs (10) nach einem der Ansprüche 1 bis 11,
**dadurch gekennzeichnet, dass** das Flugzeug (10) einerseits einen ersten Steuerknüppel (21) aufweist, der es erlaubt, Rotationsbewegungen des Flugzeugs (10) um die Längsrichtung X und um die Querrichtung Y zu steuern, und andererseits einen zweiten Steuerknüppel (22) aufweist, der es erlaubt, Translationsbewegungen des Flugzeugs (10) in der Höhenrichtung Z zu steuern, wobei ein erstes Steuerelement (31) auf dem ersten Steuerknüppel (21) angeordnet ist, und ein zweites Steuerelement (32) auf dem zweiten Steuerknüppel (22) angeordnet ist, wobei das erste Steuerelement (31) die erste Beweglichkeitsachse A und die zweite Beweglichkeitsachse B aufweist, wobei das zweite Steuerelement (32) die dritte Beweglichkeitsachse C aufweist.

13. Verfahren zur Durchführung eines Schwebeflugs eines Drehflügelflugzeugs (10) nach Anspruch 12,
**dadurch gekennzeichnet, dass** das zweite Steuerelement (32) eine vierte Beweglichkeitsachse D aufweist.

14. Verfahren zur Durchführung eines Schwebeflugs eines Drehflügelflugzeugs (10) nach einem der Ansprüche 1 bis 13,
**dadurch gekennzeichnet, dass** die Steuerelemente (31, 32) kalibriert sind und genaue Bewegungen des Flugzeugs (10) steuern.

15. Verfahren zur Durchführung eines Schwebeflugs eines Drehflügelflugzeug (10) nach einem der Ansprüche 1 bis 14,
**dadurch gekennzeichnet, dass** der erste und der zweite Geschwindigkeitsschwellenwert Vₛₑᵤᵢₗ₁, Vₛₑᵤᵢₗ₂ von der Geschwindigkeit und der Richtung des Windes sowie von der seitlichen Geschwindigkeit V_{Y} abhängen.

16. System (1) zur Durchführung eines Schwebeflugs für ein Drehflügelflugzeugs (10), wobei das Flugzeug (10) einer Flugbahn Tₛₒₗ über dem Boden mit einer Vortriebsgeschwindigkeit Va folgt,
- wobei das Flugzeug (10) aufweist:
∘ eine Längsrichtung X, die sich von dem Heck des Flugzeugs (10) zum Bug des Flugzeugs (10) erstreckt, eine Höhenrichtung Z, die sich von unten nach oben senkrecht zu der Längsrichtung X erstreckt, und eine Querrichtung Y, die sich von rechts nach links senkrecht zu der Längsrichtung X und der Höhenrichtung Z erstreckt,
∘ mindestens einen Drehflügel (11), der mit einer Mehrzahl von Hauptrotorblättern (111, 112, 113) versehen ist, deren kollektive Rotorblattverstellung und deren periodische Rotorblattverstellung um eine Verstellachse veränderbar sind, wobei das Flugzeug (10) Rotationsbewegungen um die Richtungen X, Y, Z und Translationsbewegungen entlang den Richtungen X, Y, Z durchführen kann, und
- wobei das System (1) zur Durchführung eines Schwebeflugs aufweist:
∘ mindestens ein Steuerelement (31, 32), das gemeinsam mit mehreren Beweglichkeitsachsen A, B, C, D versehen ist,
∘ einen Autopiloten (15), der Steuerbefehle gemäß vordefinierten Betriebsmodi erzeugt, wobei die Steuerbefehle Rotationsbewegungen des Flugzeugs (10) und/oder Translationsbewegungen um die bzw. in den Richtungen X, Y, Z bewirken können,
**dadurch gekennzeichnet, dass** das System (1) zur Durchführung eines Schwebeflugs das Verfahren zur Durchführung eines Schwebeflugs eines Drehflügelflugzeugs (10) gemäß einem der Ansprüche 1 bis 15 ausführen kann.

## Claims

1. A method for engaging hovering flight of a rotary-wing aircraft (10), said aircraft (10) following a path Tₛₒₗ relative to the ground with a forward speed Va, a longitudinal direction X extending from the rear of said aircraft (10) to the front of said aircraft (10), an elevation direction Z extending upwards perpendicularly to said longitudinal direction X, and a transverse direction Y extending from left to right perpendicularly to said longitudinal direction X and elevation direction Z, said aircraft (10) comprising:
- at least one rotary wing (11) provided with a plurality of main blades (111, 112, 113), the collective pitch and the cyclic pitch of which are variable about a pitch axis, said aircraft (10) being capable of performing movements in rotation about said directions X, Y, Z and in translation along said directions X, Y, Z,
- an autopilot (15) which generates control commands in accordance with predefined modes of operation and in accordance with flight setpoints, said control commands being capable of causing said movements of said aircraft (10) in rotation and/or in translation along said directions X, Y, Z, and
- flight commands comprising at least one control member (31, 32) which is provided jointly with a plurality of movement axes A, B, C, D,
**characterised in that**
- a first operating mode of said control members (31, 32) and of said autopilot is applied when a longitudinal speed U_{X} of said aircraft (10) is greater than a first threshold speed V_{threshold1}, said longitudinal speed U_{X} being a projection of said forward speed Va onto said longitudinal direction X, said autopilot (15) then enabling said aircraft (10) to approach a stop position S which is determined during the engagement of said method while maintaining path, said flight setpoints of said autopilot (15) being a ground course angle TKₛₒₗ, a deceleration rate Ga of said forward speed Va, a slope P and a heading ψ, and
- a second operating mode of said control members (31, 32) and of said autopilot is applied when said longitudinal speed U_{X} is less than a second threshold speed V_{threshold2}, said first threshold speed V_{threshold1} being greater than said second threshold speed V_{threshold2}, said autopilot (15) then enabling said aircraft (10) to engage hovering flight while maintaining heading towards said stop position S, said flight setpoints of said autopilot (15) being said longitudinal speed U_{X}, a lateral speed V_{Y} and a vertical speed W_{Z} and a heading ψ, said longitudinal, lateral and vertical speeds U_{X}, V_{Y}, W_{Z} varying towards a zero forward speed.

2. A method for engaging hovering flight of a rotary-wing aircraft (10) according to Claim 1,
**characterised in that**
- said first operating mode of said control members (31, 32) and of said autopilot (15) remains engaged as long as said longitudinal speed U_{X} is greater than or equal to said second threshold speed V_{threshold2}, and
- said second operating mode of said control members (31, 32) and of said autopilot (15) remains engaged as long as said longitudinal speed U_{X} is less than or equal to said first threshold speed V_{threshold1.}

3. A method for engaging hovering flight of a rotary-wing aircraft (10) according to any one of Claims 1 to 2,
**characterised in that** during said first operating mode of said control members (31, 32) and of said autopilot (15),
- it is possible to control, independently and by transparency, in order to define a new stop position Sₙ of said aircraft (10), a modification of:
o said deceleration rate Ga of said forward speed Va by a first action along a first movement axis A of a control member (31, 32) and by means of said autopilot (15) generating displacement of said stop position S on said path Tₛₒₗ,
∘ said ground course angle TKₛₒₗ by a second action along a second movement axis B of a control member (31, 32) and by means of said autopilot (15) generating displacement of said stop position S in a horizontal plane, and/or
∘ said slope P by a third action along a third movement axis C of a control member (31, 32) and by means of said autopilot (15) generating a modification of the altitude of said stop position S, and
- said flight setpoints of said autopilot (15) are synchronised in order to approach said new stop position Sₙ while maintaining path, said flight setpoints being inter alia a new ground course angle TKₛₒₗₙ, a new deceleration rate Gaₙ of said forward speed Va, a new slope Pₙ and/or a new heading ψₙ.

4. A method for engaging hovering flight of a rotary-wing aircraft (10) according to Claim 3,
**characterised in that** during said first operating mode of said control members (31, 32) and of said autopilot,
- it is possible to control by transparency a modification of said ground course angle TKₛₒₗ by a fourth action along a fourth movement axis D of a control member (31, 32) and by means of said autopilot (15) generating a displacement of said stop position S in a horizontal plane in order to define a new stop position Sₙ without modifying said deceleration rate Ga of said forward speed Va and said slope P, and,
- said flight setpoints of said autopilot (15) are synchronised in order to approach said new stop position Sₙ while maintaining path, said flight setpoints being inter alia a new ground course angle TKₛₒₗₙ.

5. A method for engaging hovering flight of a rotary-wing aircraft (10) according to any one of Claims 1 to 4,
**characterised in that** during said first operating mode of said control members (31, 32) and of said autopilot, said deceleration rate Ga of said forward speed Va is included within a predefined interval.

6. A method for engaging hovering flight of a rotary-wing aircraft (10) according to any one of Claims 1 to 5,
**characterised in that**, if said forward speed Va is less than a third threshold speed V_{threshold3}, said slope P is replaced by said vertical speed W_{Z} as flight setpoint of said autopilot (15) during said first operating mode of said control members (31, 32) and of said autopilot (15).

7. A method for engaging hovering flight of a rotary-wing aircraft (10) according to any one of Claims 1 to 6,
**characterised in that** during said second operating mode of said control members (31, 32) and of said autopilot (15),
- it is possible to control, independently and by transparency, in order to define a new stop position Sₙ of said aircraft (10), a modification of:
∘ said longitudinal speed U_{X} by a first action along a first movement axis A of a control member (31, 32) and by means of said autopilot (15) generating a longitudinal displacement of said stop position S,
∘ said lateral speed V_{Y} by a second action along a second movement axis B of a control member (31, 32) and by means of said autopilot (15) generating lateral displacement of said stop position S, and/or
∘ said vertical speed W_{Z} by a third action along a third movement axis C of a control member (31, 32) and by means of said autopilot (15) generating a vertical displacement of said stop position S,
- said flight setpoints of said autopilot (15) are synchronised in order to engage hovering flight towards said new stop position Sₙ while maintaining heading, said flight setpoints being inter alia a new longitudinal speed U_{Xn}, a lateral speed V_{Y} and/or a vertical speed W_{Z} which decrease towards a zero value.

8. A method for engaging hovering flight of a rotary-wing aircraft (10) according to any one of Claims 1 to 6,
**characterised in that** during said second operating mode of said control members (31, 32) and of said autopilot (15),
- it is possible to control, independently and by transparency, in order to define a new stop position Sₙ of said aircraft (10), a modification of:
∘ a longitudinal displacement of said stop position S by a first action along a first movement axis A of a control member (31, 32) and by means of said autopilot (15),
∘ a lateral displacement of said stop position S by a second action along a second movement axis B of a control member (31, 32) and by means of said autopilot (15), and/or
∘ a vertical displacement of said stop position S by a third action along a third movement axis C of a control member (31, 32) and by means of said autopilot (15),
- said flight setpoints of said autopilot (15) are synchronised in order to engage hovering flight towards said new stop position Sₙ while maintaining heading, said flight setpoints being inter alia a new longitudinal speed U_{Xn}, a lateral speed V_{Y} and/or a vertical speed W_{Z} which decrease towards a zero value.

9. A method for engaging hovering flight of a rotary-wing aircraft (10) according to any one of Claims 7 to 8,
**characterised in that** during said second operating mode of said control members (31, 32) and of said autopilot,
- it is possible to control by transparency a change of heading ψ by a fourth action along a fourth movement axis D of a control member (31, 32) and by means of said autopilot (15) independently of said speeds U_{X}, V_{Y}, W_{Z} and which may result in a displacement of said stop position S, and
- said flight setpoints of said autopilot (15) are synchronised in order to engage hovering flight towards said stop position S while maintaining heading, said flight setpoints being inter alia a new heading ψₙ.

10. A method for engaging hovering flight of a rotary-wing aircraft (10) according to any one of Claims 1 to 9,
**characterised in that**, said aircraft (10) comprising on one hand a first control lever (21) which makes it possible to control movements in rotation of said aircraft (10) about said longitudinal direction X and transverse direction Y and on the other hand a second control lever (22) which makes it possible to control movements in translation of said aircraft (10) along said elevation direction Z, a first control member (31) is said first
control lever (21) and a second control member (32) is said second control lever (22), said first control member (31) comprising said first movement axis A and said second movement axis B, said second control member (32) comprising said third movement axis C.

11. A method for engaging hovering flight of a rotary-wing aircraft (10) according to Claim 10,
**characterised in that** violent action on said first control lever (21) brings about deactivation of the maintaining of said setpoint of said slope P by means of said autopilot (15), said first control lever (21) then controlling movements in rotation of said aircraft (10) about said longitudinal direction X, and said second control lever (22) controlling movements in translation of said aircraft (10) along said elevation direction Z.

12. A method for engaging hovering flight of a rotary-wing aircraft (10) according to any one of Claims 1 to 11,
**characterised in that**, said aircraft (10) comprising on one hand a first control lever (21) which makes it possible to control movements in rotation of said aircraft (10) about said longitudinal direction X and transverse direction Y and on the other hand a second control lever (22) which makes it possible to control movements in translation of said aircraft (10) along said elevation direction Z, a first control member (31) is positioned on said first control lever (21) and a second control member (32) is positioned on said second control lever (22), said first control member (31) comprising said first movement axis A and said second movement axis B, said second control member (32) comprising said third movement axis C.

13. A method for engaging hovering flight for a rotary-wing aircraft (10) according to Claim 12,
**characterised in that** said second control member (32) comprises a fourth movement axis (D).

14. A method for engaging hovering flight of a rotary-wing aircraft (10) according to any one of Claims 1 to 13,
**characterised in that** said control members (31, 32) are calibrated and control precise movements of said aircraft (10).

15. A method for engaging hovering flight of a rotary-wing aircraft (10) according to any one of Claims 1 to 14,
**characterised in that** said first and second threshold speeds V_{threshold1}, are a function of the speed and the direction of the wind and also of said lateral speed V_{Y}.

16. A system for engaging hovering flight (1) for a rotary-wing aircraft (10), said aircraft (10) following a path Tₛₒₗ relative to the ground with a forward speed Va,
- said aircraft (10) comprising
o a longitudinal direction X extending from the rear of said aircraft (10) to the front of said aircraft (10), an elevation direction Z extending upwards perpendicularly to said longitudinal direction X, and a transverse direction Y extending from left to right perpendicularly to said longitudinal direction X and elevation direction Z,
∘ at least one rotary wing (11) provided with a plurality of main blades (111, 112, 113), the collective pitch and the cyclic pitch of which are variable about a pitch axis, said aircraft (10) being capable of performing movements in rotation about said directions X, Y, Z and in translation along said directions X, Y, Z, and
- said system for engaging hovering flight (1) comprising
o at least one control member (31, 32) which is provided jointly with a plurality of movement axes A, B, C, D,
∘ an autopilot (15) which generates control commands in accordance with predefined modes of operation, said control commands being capable of causing said movements of said aircraft (10) in rotation and/or in translation along said directions X, Y, Z,
**characterised in that** said system for engaging hovering flight (1) is capable of implementing the method for engaging hovering flight of a rotary-wing aircraft (10) according to any one of Claims 1 to 15.
